# EUROPEAN PATENT APPLICATION

(11) **EP 3 681 025 A1**
(43) Date of publication of application: **15.07.2020**
(21) Application number: 18853113.1
(22) Date of filing: 28.08.2018
(51) Int. Cl.: H02K 21/22, B62J 6/02, H02K 1/18

(54) **HUB DYNAMO**

(30) Priority: 05.09.2017 JP 2017170103
(71) Applicant: Mitsuba Corporation, Kiryu-shi, Gunma 376-8555 (JP)
(72) Inventor: CHIKARAISHI, Makoto, Kiryu-shi Gunma 376-8555 (JP); UEHARA, Shuji, Kiryu-shi Gunma 376-8555 (JP); TAKASE, Junichi, Kiryu-shi Gunma 376-8555 (JP); NAKANISHI, Takashi, Kiryu-shi Gunma 376-8555 (JP); TANABE, Takuto, Kiryu-shi Gunma 376-8555 (JP)
(74) Representative: 2K Patentanwälte Blasberg Kewitz & Reichel
(86) International application number: PCT/JP2018/031741
(87) International publication number: WO 2019/049729

(57) **Abstract**

To resolve the occurrence of abnormal noise from a laminated yoke due to rotation. A first yoke 120A is disposed on one side of a coil bobbin 110 in an axial direction thereof and a second yoke 120B is disposed on the other side of the same, to configure a stator main body 101A. A first holder 160A is disposed on the other side of the stator main body in the axial direction thereof, a second holder 160B is disposed on the one side of the same, a tip 121a of an outer circumferential side magnetic pole part 121 of the first yoke is disposed in a retaining groove 163 of the first holder, and a tip 121a of an outer circumferential side magnetic pole part 121 of the second yoke is disposed in a retaining groove 163 of the second holder. The tip of each outer circumferential side magnetic pole is clamped tightly by a pair of holding walls 162 provided on both sides of each retaining groove 163.

## Description

### BACKGROUND OF THE INVENTION

### Technical Field

The present invention relates to a hub dynamo.

### Related Art

Electricity generator that generate electricity by rotation of a wheel to supply electrical power to headlights or taillights of a bicycle are widely used. There are various types of electricity generators, and a so-called hub dynamo that is attached to a hub shaft is known.
In general, the hub dynamo is equipped with a rotor having a permanent magnet on the wheel side, and the rotor rotates around a stator arranged on the hub shaft side, to thereby generate electricity with a coil equipped in the stator.

As the stator in the hub dynamo, a claw-pole-type state in which first yokes and second yokes are assembled to a coil bobbin is known. In this stator, a plurality of first yokes and a plurality of second yokes are respectively disposed on one side and the other side in the axial direction of the coil bobbin around which the coil is wound. Besides, outer peripheral side magnetic pole parts (teeth parts) of the first yokes and outer peripheral side magnetic pole parts (teeth parts) of the second yokes are alternately arranged in the circumferential direction.

For example, in the hub dynamo described in patent literature 1, each yoke of the first yokes and the second yokes is configured as a laminated yoke in which a plurality of flat plate-like members made of a magnetic material is laminated in a direction perpendicular to the radial direction of the coil. Besides, the first yoke and the second yoke respectively have a U-shape in a side view.

That is, the first yoke has a U-shape in a side view, which includes: an outer peripheral side magnetic pole part (teeth part) located on the outer peripheral side of the coil and extending the front end from one end side in the axial direction of the coil to the other end side in the axial direction, an inner peripheral side magnetic pole part located on the inner peripheral side and extending the front end from one end side in the axial direction of the coil to an intermediate position toward the other end side in the axial direction, and a connection part extending linearly along the radial direction on one end side in the axial direction of the coil and connecting the base ends of the outer peripheral side magnetic pole part and the inner peripheral side magnetic pole part.

In addition, the second yoke has a U-shape in a side view, which includes: an outer peripheral side magnetic pole part (teeth part) located on the outer peripheral side of the coil and extending the front end from the other end side in the axial direction of the coil to one end side in the axial direction, an inner peripheral side magnetic pole part located on the inner peripheral side and extending the front end from the other end side in the axial direction of the coil to an intermediate position toward one end side in the axial direction, and a connection part extending linearly along the radial direction on the other end side in the axial direction of the coil and connecting the base ends of the outer peripheral side magnetic pole part and the inner peripheral side magnetic pole part.

Besides, on the inner peripheral side of the coil, the front end of the inner peripheral side magnetic pole part of the first yoke and the front end of the inner peripheral side magnetic pole part of the second yoke are brought into contact with each other, and thereby the first yoke and the second yoke are magnetically connected.

### [Literature of related art]

### [Patent literature]

Patent literature 1: Japanese Patent Laid-open No. 2016-41591

### SUMMARY

### [Problems to be Solved]

Meanwhile, when each yoke is configured as a laminated yoke in which a plurality of plate-like members made of a magnetic material is laminated, the plate-like members are usually joined by an adhesive. However, there is a possibility that abnormal noise is generated due to alternate rotation movement of N-poles and S-poles of a permanent magnet on the outer peripheral side of the yoke if the joining strength between the plate-like members is insufficient.

That is, for example, when the N-pole of the permanent magnet passes through the outer peripheral side of the yoke, the outer peripheral end (the outer peripheral side magnetic pole part) of the yoke is excited to the S-pole. Then, the laminated plate-like members are all excited to the S-pole, and thereby a repulsive force is generated between the plate-like members and the plate-like members tend to be separated from each other. When the joining strength between the plate-like members is weak, for example, one plate-like member laminated on the outermost side may be separated although slightly. If the permanent magnet moves more than a certain amount in this state, the adjacent S-pole approaches the one plate-like member separated, and thereby the separated plate-like member is excited to the N-pole. When the separated plate-like member is excited to the N-pole, an attractive force is generated between the separated plate-like member and the remaining plate-like members excited to the S-pole, and the separated plate-like member is attracted and slammed against the remaining plate-like members. At that time, there is a possibility that the abnormal noise caused by collision is generated.

Therefore, the present invention is accomplished in view of the above circumstances, and an objective thereof is to provide a hub dynamo capable of resolving the generation of abnormal noise from a laminated yoke due to rotation.

### [Means to Solve Problems]

In order to solve the above problems, a hub dynamo of the present invention includes: a rotor having a hub shell rotating together with a wheel and a permanent magnet circumferentially disposed on the inner periphery of a torso of the hub shell, and a stator non-rotatably fixed to a hub shaft supporting the wheel to be rotatable, disposed on the inner peripheral side of the permanent magnet while being accommodated in the hub shell, and having a ring-like coil that outputs an alternating current by rotation of the rotor; the stator has a plurality of first yokes and a plurality of second yokes plurality disposed on one side in the axial direction and the other side in the axial direction to surround the ring-like coil, and radially disposed at intervals in the circumferential direction and alternately disposed in the circumferential direction, and also has a first holder disposed on the other side in the axial direction to hold the other end side in the axial direction of the first yoke and a second holder disposed on one side in the axial direction to hold one side in the axial direction of the second yoke; the first yoke has: an outer peripheral side magnetic pole part located on the outer peripheral side of the coil and extending the front end from one end side in the axial direction to the other end side in the axial direction of the coil, an inner peripheral side magnetic pole part located on the inner peripheral side of the coil and extending the front end from one end side in the axial direction of the coil to an intermediate position toward the other end side in the axial direction, and a connection part extending linearly on one end side in the axial direction of the coil and connecting the base ends of the outer peripheral side magnetic pole part and the inner peripheral side magnetic pole part; the second yoke has: an outer peripheral side magnetic pole part located on the outer peripheral side of the coil and extending the front end from the other end side in the axial direction to one end side in the axial direction of the coil, an inner peripheral side magnetic pole part located on the inner peripheral side of the coil and extending the front end from the other end side in the axial direction of the coil to an intermediate position toward one end side in the axial direction, and a connection part extending linearly on the other end side in the axial direction of the coil and connecting the base ends of the outer peripheral side magnetic pole part and the inner peripheral side magnetic pole part; the first yoke and the second yoke are respectively configured as a laminated yoke in which a plurality of flat plate-like members made of a magnetic material is laminated in a direction perpendicular to the radial direction of the coil, and the front end of the inner peripheral side magnetic pole part of the first yoke and the front end of the inner peripheral side magnetic pole part of the second yoke come into contact with each other on the inner peripheral side of the coil; furthermore, the front end of the outer peripheral side magnetic pole of the first yoke is disposed between a pair of adjacent pressing walls among a plurality of pressing walls arranged in the circumferential direction on the first holder, and thereby the plurality of plate-like members at the front end of the outer peripheral side magnetic pole are clamped tightly in the lamination direction by the pair of pressing walls, and the front end of the outer peripheral side magnetic pole of the second yoke is disposed between a pair of adjacent pressing walls among a plurality of pressing walls arranged in the circumferential direction on the second holder, and thereby the plurality of plate-like members at the front end of the outer peripheral side magnetic pole are clamped tightly in the lamination direction by the pair of pressing walls.

In this configuration, the front end of the outer peripheral side magnetic pole part of the yoke is clamped tightly in the lamination direction of the plate-like members by the holder. Accordingly, the plate-like member at the end in the lamination direction can be prevented from being separated from the other plate-like members even if a magnetic repulsive force is generated between the plate-like members of the laminated yoke. As a result, it is possible to eliminate a phenomenon that the plate-like member at the end in the lamination direction is separated from the other plate-like members according to the rotation of the permanent magnet and then is magnetically attracted and slammed against the other plate-like members, and it is possible to resolve the generation of abnormal noise. In addition, since the front end of the outer peripheral side magnetic pole part of the yoke is clamped in the state that the plate-like members are in close contact with each other, it is also possible to omit a process for adhering the plate-like members using an adhesive, and the manufacturing process is simplified.

In the hub dynamo of the present invention, during arrangement of the first yoke and the second yoke, the arrangement position of the first yoke and the arrangement position of the second yoke are alternately set at intervals in the circumferential direction on the outer peripheral surface of the stator; a plane including the central axis of the hub shaft and the circumferential center on the outer peripheral surface side of the outer peripheral side magnetic pole part of the first yoke is set as an arrangement reference surface of the first yoke, and a plane inclined to one side in the circumferential direction with respect to the arrangement reference surface of the first yoke is set as an actual arrangement surface of the first yoke, and thereby the first yoke is arranged on the actual arrangement surface of the first yoke; a plane including the central axis of the hub shaft and the circumferential center on the outer peripheral surface side of the outer peripheral side magnetic pole part of the second yoke is set as an arrangement reference surface of the second yoke, and a plane inclined to the other side in the circumferential direction with respect to the arrangement reference surface of the second yoke is set as an actual arrangement surface of the second yoke, and thereby the second yoke is arranged on the actual arrangement surface of the second yoke; and the front end of the inner peripheral side magnetic pole part of the first yoke and the front end of the inner peripheral side magnetic pole part of the second yoke come into contact with each other on an intersection line between the actual arrangement surface of the first yoke and the actual arrangement surface of the second yoke.

In this configuration, since the yokes are disposed not on the plane along the radial direction but on the plane inclined with respect to the radial direction (the actual arrangement plane of the yoke), the front end of the inner peripheral side magnetic pole part of the first yoke and the front end of the inner peripheral side magnetic pole part of the second yoke can be brought into contact with each other in a one-to-one relationship. Accordingly, it is possible to eliminate a gap generated on the contacting surface between the first yoke and the second yoke due to variations caused by dimensional tolerances of the yoke or the like, and it is possible to increase the degree of close contact of the contacting surface. As a result, the magnetic connection between the yokes can be stabilized and the iron loss can be reduced.

In the hub dynamo of the present invention, the stator has a coil bobbin holding the ring-like coil, and the coil bobbin has: a torso around which the coil is wound, a first flange disposed on one side in the axial direction of the torso and holding one end side in the axial direction of the first yoke, and a second flange disposed on the other side in the axial direction of the torso and holding the other end side in the axial direction of the second yoke; the first holder disposed on the other side in the axial direction has: a plate-like holder body part being annular and disposed on the axial outer side of the second flange of the coil bobbin, and a plurality of pressing walls arranged in the circumferential direction on the outer peripheral side of the axial inner side surface of the annular plate-like holder body part and protruding toward one side in the axial direction; the second holder disposed on one side in the axial direction has: a plate-like holder body part being annular and disposed on the axial outer side of the first flange of the coil bobbin, and a plurality of pressing walls arranged in the circumferential direction on the outer peripheral side of the axial inner side surface of the annular plate-like holder body part and protruding toward the other side in the axial direction; the front end of the outer peripheral side magnetic pole part of the first yoke is clamped between every other pair of pressing walls among the plurality of pressing walls arranged in the circumferential direction of the first holder, and the front end of the outer peripheral side magnetic pole part of the second yoke is clamped between every other pair of pressing walls among the plurality of pressing walls arranged in the circumferential direction of the second holder.

In this configuration, the front end extending to the other end side in the axial direction of the outer peripheral side magnetic pole part of the first yoke which holds one end side in the axial direction by the first flange of the coil bobbin can be supported by the first holder disposed on the axial outer side of the second flange of the coil bobbin. In addition, the front end extending to one end side in the axial direction of the outer peripheral side magnetic pole part of the second yoke which holds the other end side in the axial direction by the second flange of the coil bobbin can be supported by the second holder disposed on the axial outer side of the first flange of the coil bobbin. In other words, the holder that holds the front end of the outer peripheral side magnetic pole part is disposed separately from the flange of the coil bobbin on a side opposite to the side where the respective yokes are disposed. Therefore, regardless of the processing precision of the flange of the coil bobbin, the front end of the outer peripheral side magnetic pole part of the yoke can be stably and tightly held as long as the precision of the holder is secured.

In the hub dynamo of the present invention, on the inner peripheral sides of the pressing walls forming a pair of the first holder and the second holder, a reinforcement wall that connects the two pressing walls by straddling the two pressing walls is arranged.

In this configuration, since the pair of pressing walls is reinforced by the reinforcement wall, the clamping force applied to the front end of the outer magnetic pole part of the yoke can be set strong. In addition, the reinforcing wall is disposed straddling the inner peripheral sides of the pair of pressing walls, and thereby it is also possible to prevent the front end of the outer peripheral side magnetic pole part of the yoke from deviating inward in the radial direction.

In the hub dynamo of the present invention, the first holder and the second holder are made of resin, and a plurality of protrusions is arranged, on the side surface of the inner peripheral side of the axial outer side of each annular plate-like holder body part of the first holder and the second holder, which absorbs a fastening force from a nut screwed to the hub shaft by being crushed by the nut when the first yoke and the second yoke are fastened in the axial direction by the nut.

In this configuration, the fastening force from the nut can be directly applied to the yoke. Therefore, the front end of the inner peripheral side magnetic pole part of the first yoke and the front end of the inner peripheral side magnetic pole part of the second yoke can be brought into firm contact with each other, and the first and second yokes can be magnetically coupled in a satisfactory manner. In addition, the protrusions are crushed during fastening of the nut with respect to the resin holder, and thereby an excessive fastening force can be prevented from acting on the holder body part. Thereby, the holder can be fastened and fixed appropriately, and it is also unnecessary to set a small fastening force from the nut just because there is a resin holder. In other words, it is possible to increase the magnetic coupling between the first yoke and the second yoke by setting a large fastening force from the nut to be large.

In the hub dynamo of the present invention, coil drawing recesses penetrating in the axial direction are arranged at the inner peripheral edge and the outer peripheral edge of the annular plate-like holder body part.

In this configuration, the start end or terminal end of the coil can be smoothly drawn outside.

### [Effect]

According to the hub dynamo of the present invention, even if a magnetic repulsive force is generated between the plate-like members of the laminated yoke, the plate-like member at the end in the lamination direction can be prevented from being separated from the other plate-like members. As a result, it is possible to eliminate a phenomenon that the plate-like member at the end in the lamination direction is separated from the other plate-like members according to the rotation of the permanent magnet and then is magnetically attracted and slammed against the other plate-like members, and it is possible to resolve the generation of abnormal noise.

### BRIEF DESCRIPTION OF THE DRAWINGS

FIG. 1 is an attachment schematic view of a hub dynamo in an embodiment of the present invention.
FIG. 2 is an external perspective view of the hub dynamo in the embodiment of the present invention.
FIG. 3 is a cross-sectional view of the hub dynamo in the embodiment of the present invention.
FIG. 4 is a side view of a stator unit constituting the hub dynamo in the embodiment of the present invention.
FIG. 5 is a perspective view of the stator unit constituting the hub dynamo in the embodiment of the present invention, the stator unit being viewed from one P-side in the axial direction.
FIG. 6 is a perspective view of the stator unit constituting the hub dynamo in the embodiment of the present invention, the stator unit being viewed from the other Q-side in the axial direction.
FIG. 7 is an exploded perspective view of the stator unit constituting the hub dynamo in the embodiment of the present invention, the stator unit being viewed from one P-side in the axial direction.
FIG. 8 is a perspective view of a stator constituting the hub dynamo in the embodiment of the present invention.
FIG. 9 is an exploded perspective view of the stator constituting the hub dynamo in the embodiment of the present invention.
FIG. 10 is an exploded perspective view of a stator body which is a main part of the stator constituting the hub dynamo in the embodiment of the present invention.
FIG. 11 is a perspective view of a coil bobbin of the stator constituting the hub dynamo in the embodiment of the present invention.
FIGS. 12(a) and 12(b) are diagrams of the stator body constituting the hub dynamo in the embodiment of the present invention, the stator body being viewed from the axial direction; FIG. 12(a) is a diagram taken along an arrow EA in FIG. 10, and FIG. 12(b) is a diagram taken along an arrow EB in FIG. 10.
FIG. 13 is a diagram of yokes and the coil bobbin viewed from one P-side in the axial direction, for illustrating arrangement angles of a first yoke and a second yoke of the stator body constituting the hub dynamo in the embodiment of the present invention.
FIGS. 14(a), 14(b), and 14(c) are diagrams for illustrating the arrangement angles of the first yoke and the second yoke of the stator constituting the hub dynamo in the embodiment of the present invention; FIG. 14(a) is a perspective view showing a state before combining a pair of first yoke and second yoke, FIG. 14(b) is a perspective view showing a state after combining the first yoke and the second yoke, and FIG. 14(c) is a diagram taken along an arrow F in FIG. 14(b).
FIGS. 15(a), 15(b), and 15(c) are diagrams for illustrating a configuration of each yoke of the stator constituting the hub dynamo in the embodiment of the present invention; FIG. 15(a) is perspective view of one plate-like member constituting the yoke, FIG. 15(b) is a perspective view of the yoke configured by laminating plate-like members, and FIG. 15(c) is a perspective view of the yoke viewed from the connection part side.
FIG. 16 is a perspective view of a first holder and a second holder of the stator constituting the hub dynamo in the embodiment of the present invention.
FIG. 17 is a side view showing the arrangement of front ends of outer peripheral side magnetic pole parts of the first yoke and the second yoke with respect to the first holder and the second holder of the stator constituting the hub dynamo in the embodiment of the present invention.
FIGS. 18(a) and 18(b) are diagrams viewed from one P-side in the axial direction for illustrating a relationship between the stator constituting the hub dynamo in the embodiment of the present invention and a nut and a washer for fastening; FIG. 18(a) is a diagram showing a state before fastening the nut, and FIG. 18(b) is a diagram showing a state after fastening the nut.
FIGS. 19(a) and 19(b) are diagrams viewed from the other Q-side in the axial direction for illustrating a relationship between the stator constituting the hub dynamo in the embodiment of the present invention and a nut and washers for fastening; FIG. 19(a) is a diagram showing a state before fastening the nut, and FIG. 19(b) is a diagram showing a state after fastening the nut.
FIG. 20 is a cross-sectional view for illustrating the relationship between the stator constituting the hub dynamo in the embodiment of the present invention and the nut and washer for fastening.
FIG. 21 is a partially enlarged view taken along an arrow direction N1 in FIG. 20.
FIG. 22 is a partially enlarged view taken along an arrow direction N2 in FIG. 20.
FIGS. 23(a)-(d) are a diagram for illustrating a principle of the generation of abnormal noise from a laminated yoke due to rotation in order of (a) to (d).

### DESCRIPTION OF THE EMBODIMENTS

Next, an embodiment of the present invention is described with reference to the diagrams.

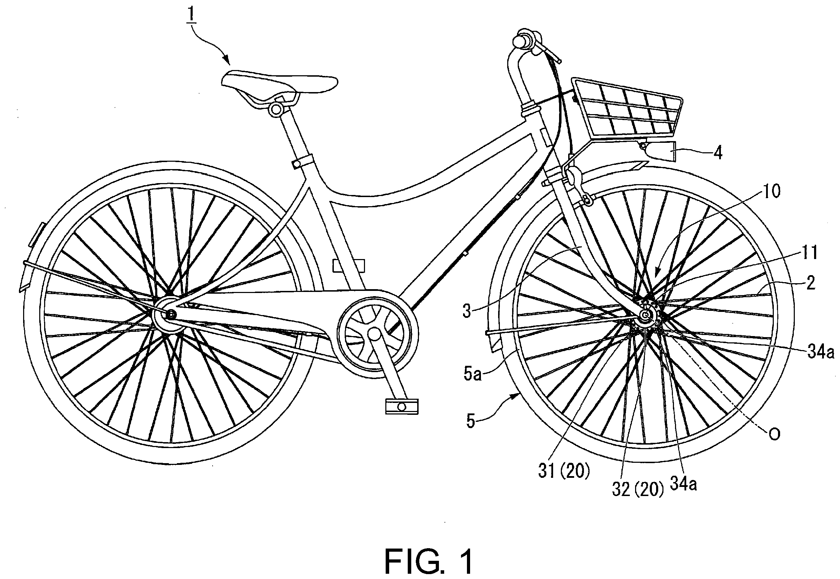

FIG. 1 is an attachment schematic view of a hub dynamo 10. Besides, in the following description, a case is described in which the hub dynamo 10 of the present invention is attached to a hub shaft 11 of a bicycle 1 and electrical power is supplied to a headlamp 4 of the bicycle 1. The headlight 4 uses an LED lamp as a lamp instead of using a filament-type bulb.

### (Attachment form of hub dynamo)

As shown in FIG. 1, a front wheel 5 of the bicycle 1 is rotatably pivoted via the hub shaft 11 by a front fork 3 constituting a part of a frame. Both sides of the hub shaft 11 are non-rotatably fastened and fixed to the front fork 3 by a nut (not shown) or the like. The hub dynamo 10 is attached coaxially to the hub shaft 11 at most of the axial center of the hub shaft 11. The hub dynamo 10 is arranged to supply electrical power to the headlight 4 disposed on a lateral side of the front wheel 5.

The hub dynamo 10 includes a rotor 20 (described later) which is connected to a spoke 2 of the front wheel 5 and rotates together with the front wheel 5 around the hub shaft 11, and a stator 101 (described later) which is non-rotatably attached to the hub shaft 11 in a state of being located on the inner peripheral side of the rotor 20.
Hereinafter, the axial direction of a central axis O of the hub shaft 11 is simply referred to as an axial direction, the direction perpendicular to the axial direction is referred to as a radial direction, and the direction around the central axis O is referred to as a circumferential direction. Besides, in a part of the hub shaft 11 located axially outside of a part of the hub shaft 11 to which at least a stator 101 (described later) is attached, a male screw part (not shown) for fixing the hub dynamo 10 to the front fork 3 is formed.

### (Rotor)

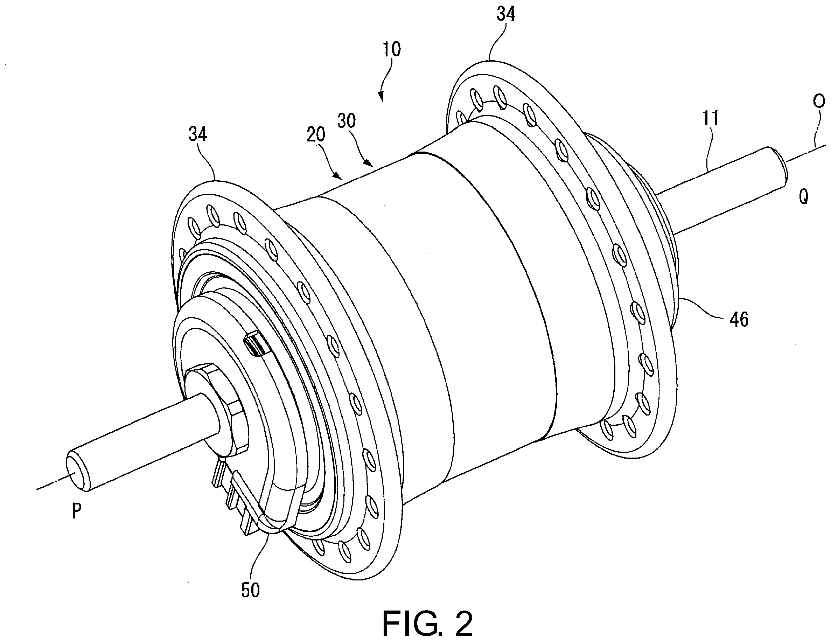

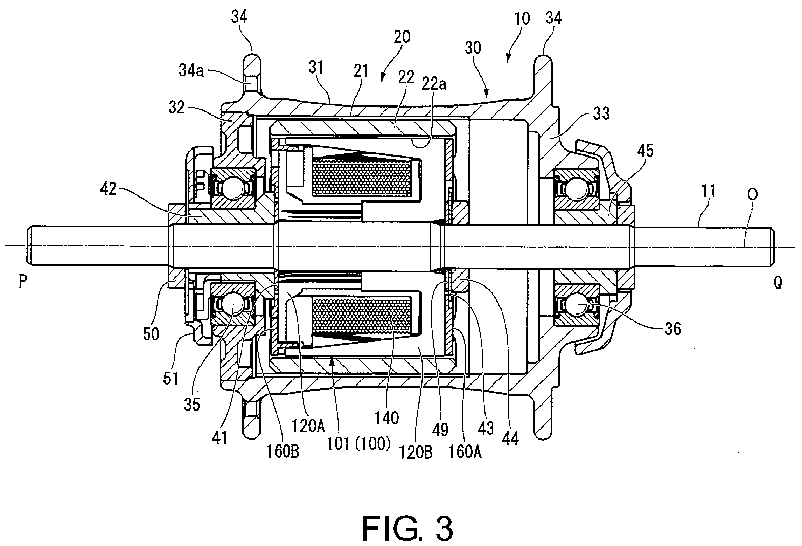

FIG. 2 is an external perspective view of the hub dynamo 10. FIG. 3 is a cross-sectional view of the hub dynamo 10.

As shown in FIGS. 2 and 3, the rotor 20 is mainly configured by a hub shell 30. The hub shell 30 includes a cylindrical torso (tube) 31 and a second end plate 33 on the other Q-side in the axial direction of the torso 31 (the right side in FIG. 3) which are integrally formed in a substantially bottomed cylindrical shape, and a first end plate 32 which blocks an opening on one P-side in the axial direction of the torso 31 (the left side in FIG. 3). The first end plate 32 is press-fitted and fixed to the torso 31.

On the outer periphery of the hub shell 30 on the axial P-side in the axial direction and the other Q-side in the axial direction, flange parts 34 projecting radially outward are formed. In each flange part 34, a plurality of support holes 34a penetrating in the axial direction is formed at equal intervals in the circumferential direction.

As shown in FIG. 1, inner ends of a plurality of spokes 2 extending from a rim 5a of the front wheel 5 toward the inner diameter side are engaged with the support holes 34a. Besides, the support holes 34a of the left and right flange parts 34 are disposed with a phase deviation in the circumferential direction by a half pitch.

Outer rings of bearings 35, 36 are respectively fitted into the inner periphery of the first end blade 32 and the inner periphery of the second end blade 33. Then, the rotor 20 mainly configured by the hub shell 30 is rotatably supported by the hub shaft 11 via the bearings 35, 36 and thereby rotates about the hub shaft 11 together with the rotation of the front wheel 5. That is, the rotor 20 functions as a hub that supports the front wheel 5 so that the front wheel 5 is rotatable.

On the inner periphery of the torso 31 of the hub shell 30, a permanent magnet 22 formed by, for example, ferrite or the like is disposed via a ring yoke 21 being cylindrical. The ring yoke 21 is made of a magnetic metal material (for example, iron). By the ring yoke 21 being made of iron for example, the hub shell 30 can be made of aluminum to reduce weight. The permanent magnet 22 is disposed in close contact with the inner periphery of the ring yoke 21 and is attached by an adhesive or the like. The permanent magnet 22 is disposed in a cylindrical shape along the inner peripheral surface of the torso 31, and thereby the permanent magnet 22 covers the entire outer peripheral surface of the stator 101.

Besides, the permanent magnet 22 is incorporated into the inner periphery of the torso 31 of the hub shell 30 in a state of being divided into a plurality of parts in the circumferential direction. On the inner peripheral surface of the permanent magnet 22 disposed in a cylindrical shape, magnetic poles of the N-pole and S-pole are alternately magnetized along the circumferential direction at equal intervals and face the outer peripheral parts of a first yoke 120A and a second yoke 120B described later.

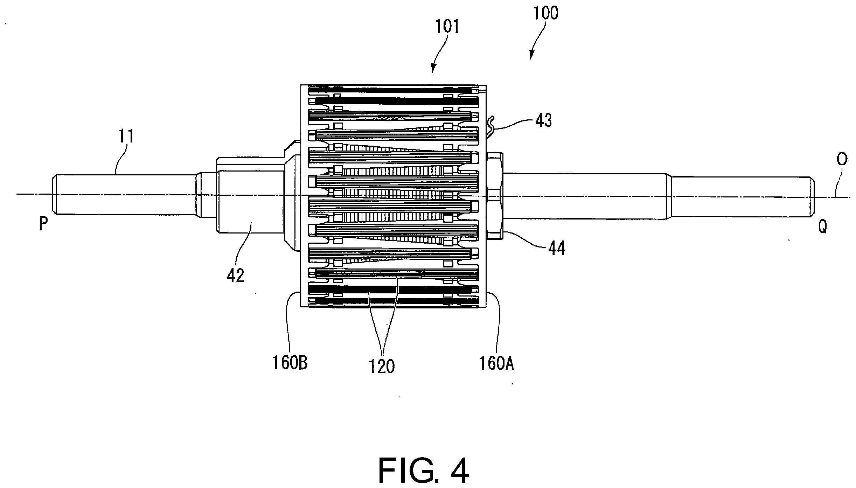

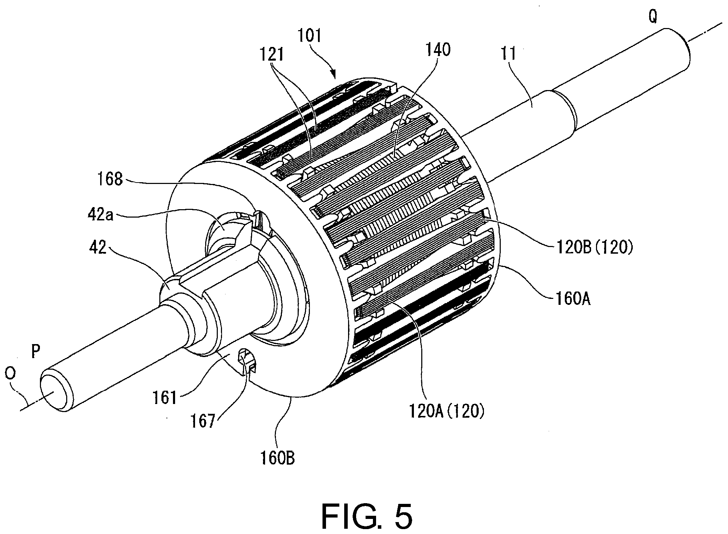

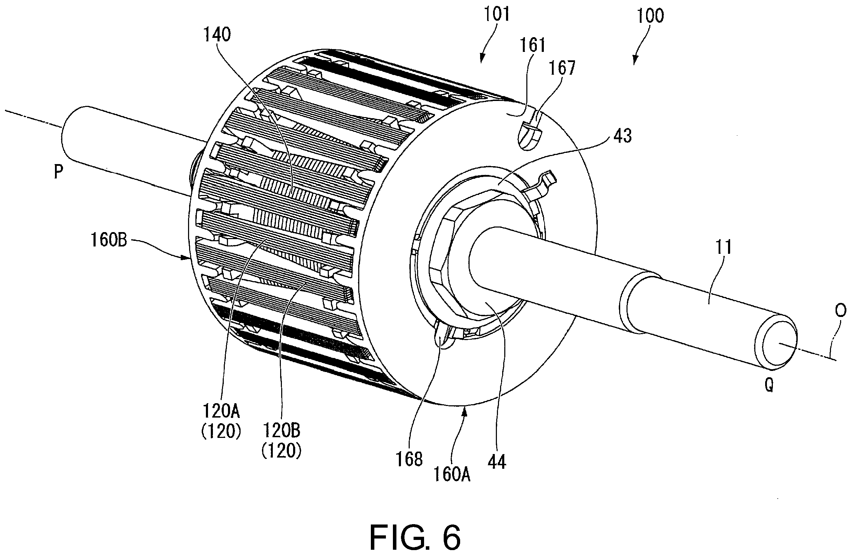

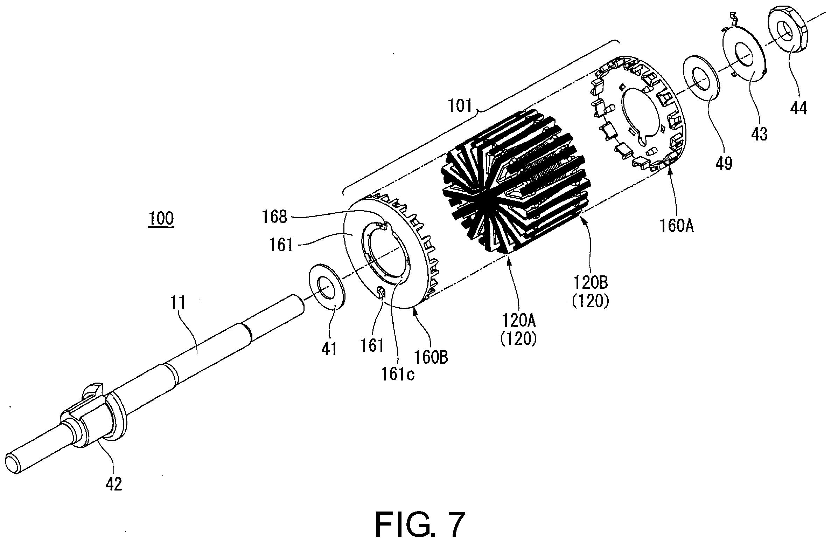

FIG. 4 is a side view of a stator unit constituting the hub dynamo. FIG. 5 is a perspective view of the stator unit viewed from one P-side in the axial direction. FIG. 6 is a perspective view of the stator unit viewed from the other Q-side in the axial direction. FIG. 7 is an exploded perspective view of the stator viewed from one P-side in the axial direction.

As shown in FIG. 3, a large-diameter part is formed in an axial intermediate part of the hub shaft 11, and the stator 101 is attached to the outer periphery of the large-diameter part.

As shown in FIGS. 4-7, the stator 101 is positioned and fixed to the hub shaft 11 by a sleeve nut 42 and a fastening nut 44 (both are simply referred to as "nut" in some cases) via washers (plate-like members) 41, 43, 49 arranged at both ends of the stator 101 in the axial direction. The hub shaft 11, the stator 101 and the like constitute a stator unit 100.

As shown in FIG. 3, the inner ring of the bearing 35 is fitted into the outer periphery of the sleeve nut 42 disposed on one P-side in the axial direction of the stator unit 100. A connector 50 is arranged axially outside of the bearing 35, and a nut 51 is disposed on the axial outer side of the connector 50. The nut 51 is screwed to the hub shaft 11, and thereby the connector 50 is fixed to the hub shaft 11, and one end side of the hub shell 30 is rotatably supported by the hub shaft 11 via the bearing 35.

In addition, another sleeve nut 45 is disposed on the other Q-side in the axial direction of the hub shaft 11, and the inner ring of the bearing 36 is fitted into the outer periphery of the sleeve nut 45. A cover 46 is arranged axially outside of the bearing 36, and a nut 47 is disposed in the inner peripheral part of the cover 46. The nut 47 is screwed to the hub shaft 11, and thereby the cover 46 is fixed to the hub shaft 11, and the other end side of the hub shell 30 is rotatably supported by the hub shaft 11 via the bearing 36.

### (Stator)

Next, details of the stator 101 are described.

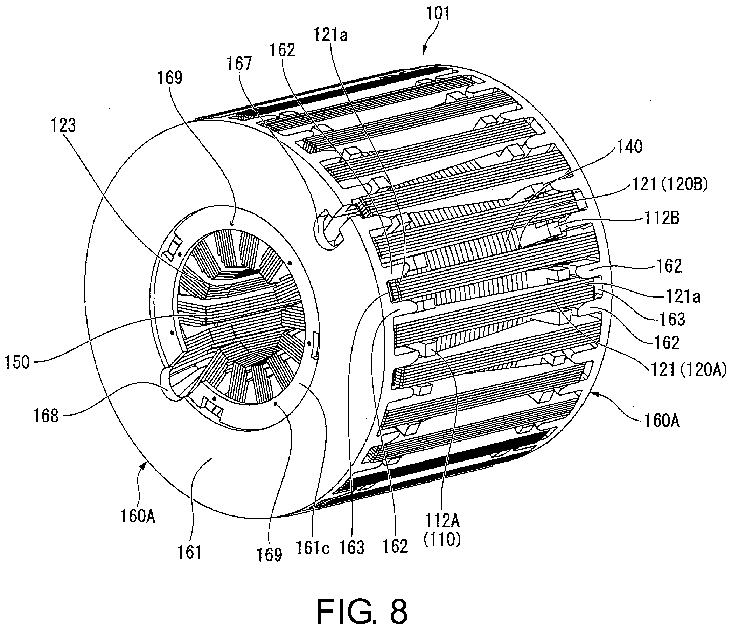

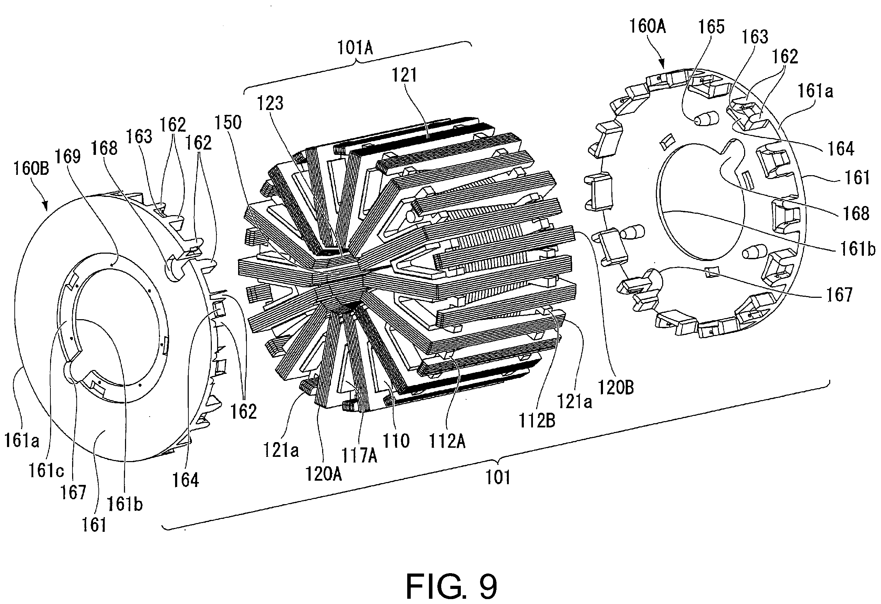

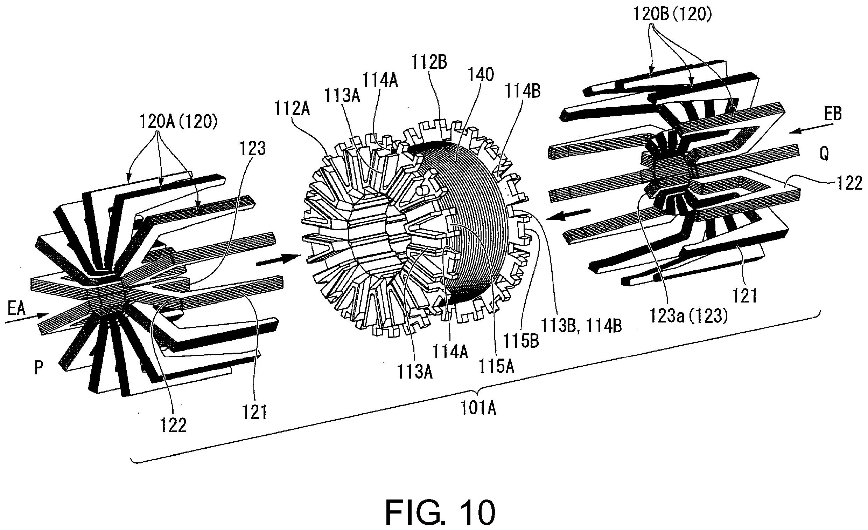

FIG. 8 is a perspective view showing a configuration of the stator 101. FIG. 9 is an exploded perspective view showing the configuration of the stator 101. FIG. 10 is an exploded perspective view of a stator body 101A that is a main part of the stator 101.

As shown in FIGS. 8 and 9, the stator 101 includes the stator body 101A that is a main part, and a first holder 160A and a second holder 160B arranged on both sides in the axial direction of the stator body 101A. Both the holders 160A and 160B have the same configuration and are formed as an integrally molded product of resin.

The point to be noted here is that the first holder 160A is disposed on the other Q-side in the axial direction and holds a front end 121a extending to the other Q-side in the axial direction of the first yoke 120A (described later) disposed on one P-side in the axial direction. In addition, the second holder 160B is disposed on one P-side in the axial direction, and holds a front end 121a extending to one P-side in the axial direction of the second yoke 120B (described later) disposed on the other Q-side in the axial direction.

As shown in FIG. 10, the stator body 101A is configured by a tubular coil bobbin 110 made of a synthetic resin (made of a nonmagnetic material) through which the hub shaft 11 penetrates, a ring-like coil 140 wound around the coil bobbin 110, and a claw-pole-type stator core 120 assembled to surround the coil 140 inside. The hub shaft 11, the coil bobbin 110, the first yoke 120A, and the second yoke 120B are disposed coaxially.

Here, a plurality of first yokes 120A is arranged on one P-side in the axial direction and a plurality of second yokes 120B is arranged on the other Q-side in the axial direction as elements constituting the claw-pole-type stator core 120. The plurality of first yokes 120A and the plurality of second yokes 120B are disposed radially at a fixed interval in the circumferential direction and are alternately arranged in the circumferential direction. Besides, the outer peripheral parts of the yokes 120A, 120B are configured to face an inner peripheral surface 22a (see FIG. 3) of the permanent magnet 22 with a slight gap (air gap) therebetween.

The number of the yokes 120A, 120B (the number of poles) is set in relation to the number of magnetic poles of the permanent magnet 22. In the embodiment, a total of 32 yokes that are 16 first yokes 120A and 16 second yokes 120B are arranged at a fixed interval. Although not shown, a wiring is connected to the coil 140, and the wiring is drawn outside along the hub shaft 11.

### (Coil bobbin)

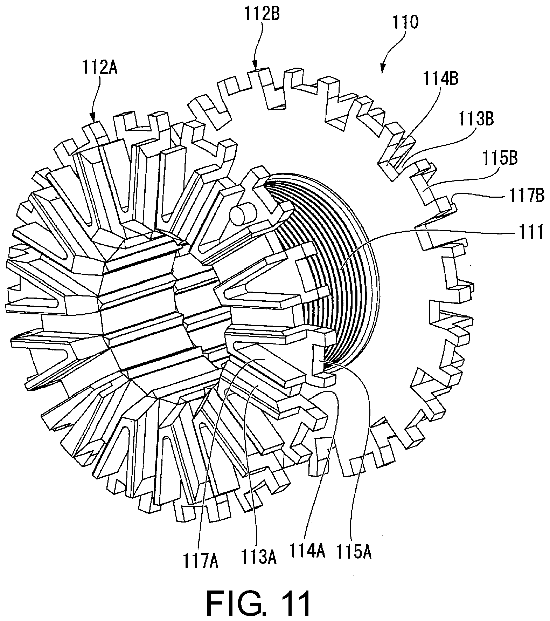

FIG. 11 is a perspective view of the coil bobbin.

As shown in FIG. 11, the coil bobbin 110 has a cylindrical torso 111 having a coil 140 (see FIG. 10) wound on the outer periphery, and first flanges 112A and second flanges 112B arranged to project radially outward on the outer peripheries of the ends on one P-side and the other Q-side in the axial direction of the torso 111.

A guide groove 113A is arranged by a rib-like wall on the axial outer end surface of the first flange 112A. On the outer peripheral surface of the first flange 112A, an engagement groove 114A in communication with the guide groove 113A is arranged at a position corresponding to the guide groove 113A. The guide groove 113A and the engagement groove 114A are used for positioning and attaching the first yoke 120A to the coil bobbin 110. In addition, a positioning recess 117A which is formed in a V-shape when viewed from the axial direction is arranged by the rib-like wall next to the guide groove 113A of the axial outer end surface of the first flange 112A.

In addition, similar to the first flange 112A, a guide groove 113B is arranged by a rib-like wall on the axial outer end surface of the second flange 112B. On the outer peripheral surface of the second flange 112B, an engagement groove 114B in communication with the guide groove 113B is arranged at a position corresponding to the guide groove 113B. The guide groove 113B and the engagement groove 114B are used for positioning and attaching the second yoke 120B to the coil bobbin 110. In addition, a positioning recess 117B which is formed in a V-shape when viewed from the axial direction is arranged by the rib-like wall next to the guide groove 113B of the axial outer end surface of the second flange 112B.

Furthermore, support grooves 115A, 115B which are respectively located in the circumferential middle of the engagement grooves 114A, 114B and support the front ends of the opposite first yoke 120A and second yoke 120B are arranged on the outer peripheral surface of the first flange 112A and the outer peripheral surface of the second flange 112B. That is, since the first yokes 120A and the second yokes 120B are alternately disposed at a fixed interval in the circumferential direction, the circumferential position of the engagement groove 114A of the first flange 112A and the circumferential position of the support groove 115B of the second flange 112B matches each other, and the circumferential position of the engagement groove 114B of the second flange 112B and the circumferential position of the support groove 115A of the first flange 112A matches each other. The guide grooves 113A, 113B, the engagement grooves 114A, 114B, and the support grooves 115A, 115B are described later in detail.

### (Yoke)

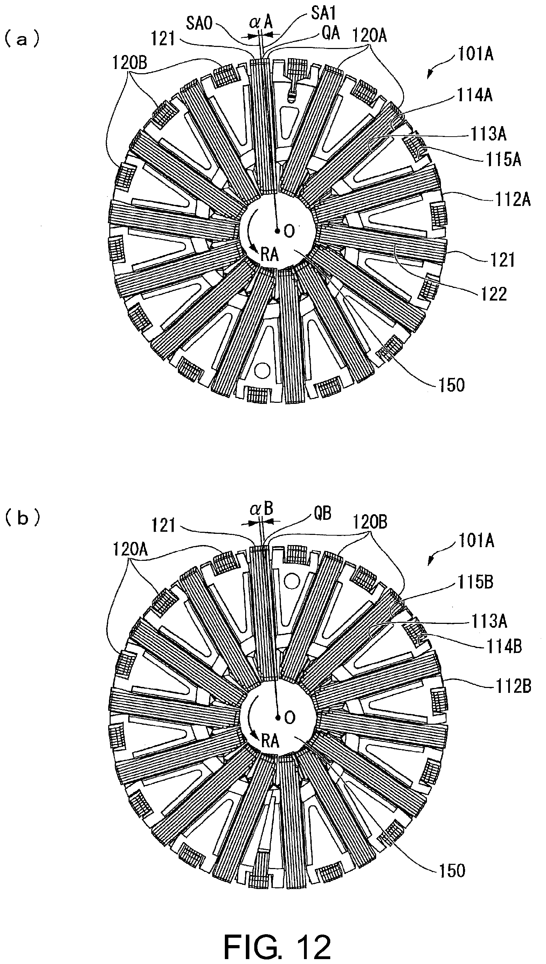

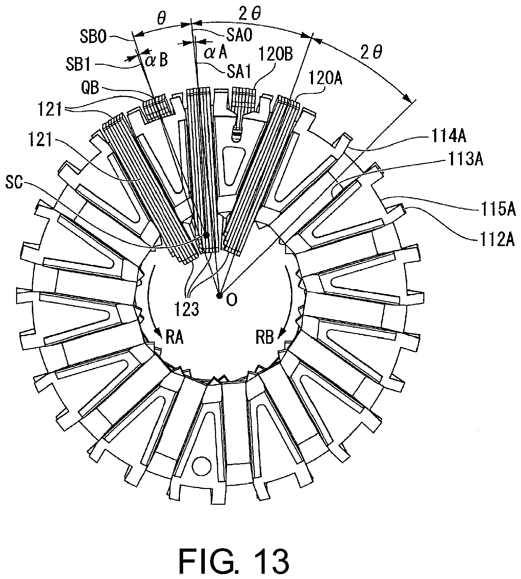

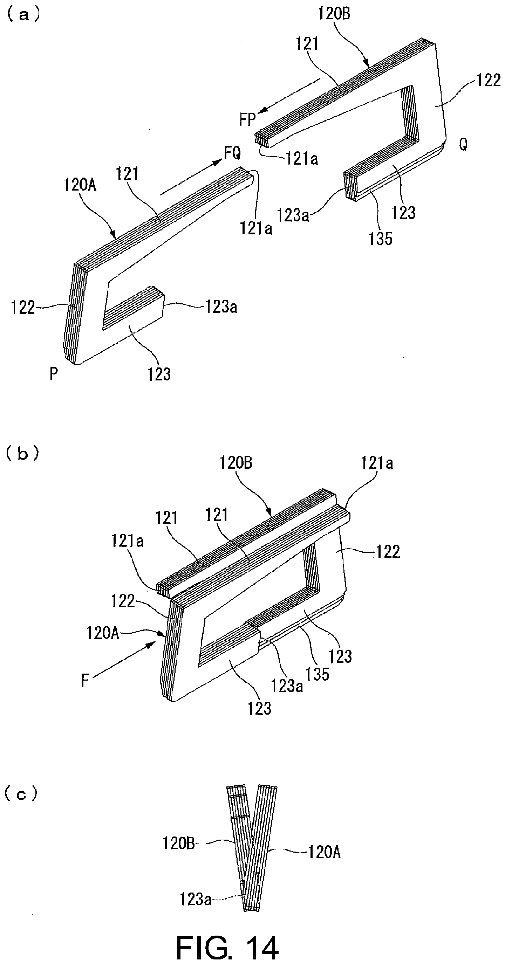

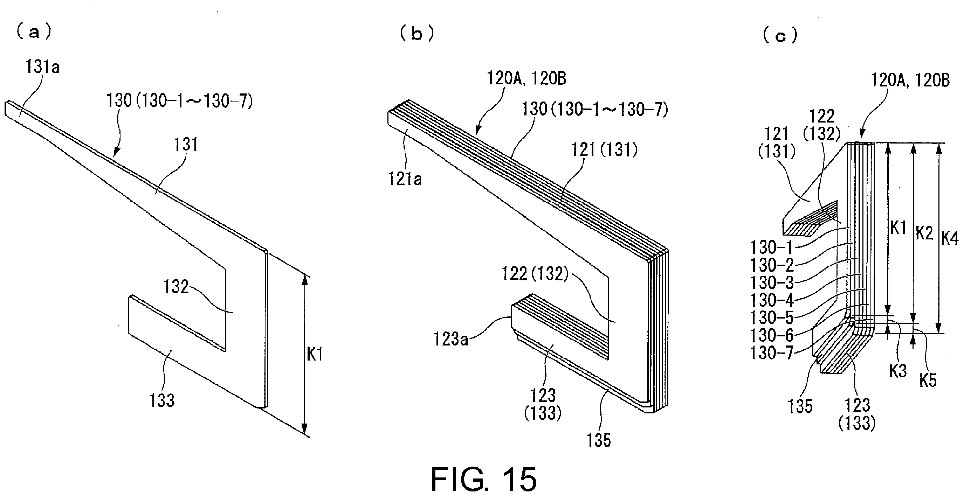

FIGS. 12(a) and 12(b) are diagrams of the stator body viewed from the axial direction; FIG. 12(a) is a diagram taken along an arrow EA in FIG. 10, and FIG. 12(b) is a diagram taken along an arrow EB in FIG. 10. FIG. 13 is a diagram of the yokes and the coil bobbin viewed from one P-side in the axial direction, for illustrating arrangement angles of the first yoke and the second yoke of the stator body. FIGS. 14(a), 14(b), and 14(c) are diagrams for illustrating the arrangement angles of the first yoke and the second yoke; FIG. 14(a) is a perspective view showing a state before combining a pair of first yoke and second yoke, FIG. 14(b) is a perspective view showing a state after combining the first yoke and the second yoke, and FIG. 14(c) is a diagram taken along an arrow F in FIG. 14(b). FIGS. 15(a), 15(b), and 15(c) are diagrams for illustrating a configuration of each yoke; FIG. 15(a) is a perspective view of one plate-like member constituting the yoke, FIG. 15(b) is a perspective view of the yoke configured by laminating plate-like members, and FIG. 15(c) is a perspective view of the yoke viewed from the connection part side.

As shown in FIGS. 14(a)-14(c) by taking out a combination example of a pair of first yoke 120A and second yoke 120B, except that the direction for the assembly to the coil bobbin 110 is reversed, the first yoke 120A and the second yoke 120B have the same structure and have a U-shape in a side view.

That is, as shown in FIGS. 14(a)-14(c) and FIG. 10, the first yoke 120A has: an outer peripheral side magnetic pole part 121 located on the outer peripheral side of the coil 140 and extending a front end 121a from one end side (P-side) in the axial direction of the coil 140 to the other end side (Q-side) in the axial direction, an inner peripheral side magnetic pole part 123 located on the inner peripheral side of the coil 140 and extending a front end 123a from one end side (P-side) in the axial direction of the coil 140 to an intermediate position toward the other end side (Q-side) in the axial direction, and a connection part 122 extending linearly along the radial direction on one end side (P-side) in the axial direction of the coil 140 and connecting the base ends of the outer peripheral side magnetic pole part 121 and the inner peripheral side magnetic pole part 123.

Similarly, the second yoke 120B has: an outer peripheral side magnetic pole part 121 located on the outer peripheral side of the coil 140 and extending a front end 121a from the other end side (Q-side) in the axial direction of the coil 140 to one end side (P-side) in the axial direction, an inner peripheral side magnetic pole part 123 located on the inner peripheral side of the coil 140 and extending a front end from the other end side (Q-side) in the axial direction of the coil 140 to an intermediate position toward one end side (P-side) in the axial direction, and a connection part 122 extending linearly along the radial direction on the other end side (Q-side) in the axial direction of the coil 140 and connecting the base ends of the outer peripheral side magnetic pole part 121 and the inner peripheral side magnetic pole part 123.

The radial outer peripheral edge of the outer peripheral side magnetic pole part 121 is disposed substantially parallel to the hub shaft 11. The outer peripheral side magnetic pole part 121 is formed in a tapered shape so that the radial inner peripheral edge thereof is closer to the radial outer peripheral edge toward the front end 121a. In the front end part of the outer peripheral side magnetic pole part 121, the radial inner peripheral edge and the radial outer peripheral edge are parallel to each other. In other words, the radial inner peripheral edge of the outer peripheral side magnetic pole part 121 is formed obliquely from the base end to the midway toward the front end 121a, and is formed parallel to the radial outer peripheral edge in the front end part. The radial inner peripheral edge and the radial outer peripheral edge of the inner peripheral side magnetic pole part 123 are formed parallel to the outer peripheral edge of the outer peripheral side magnetic pole part 121.

As shown in FIGS. 8 and 9, the inner peripheral side magnetic pole part 123 of each of the yokes 120A, 120B is inserted into the inner periphery of the coil bobbin 110 so as to be located on the inner peripheral side of the coil 140, and is located between the inner peripheral surface of the torso 111 of the coil bobbin 110 and the outer peripheral surface of the hub shaft 11. Then, the hub shaft 11 penetrates a stator central hole 150 surrounded by the inner peripheral side magnetic pole parts 123 of the yokes 120A, 120B arranged densely in the circumferential direction (see FIG. 7).

### (Plate-like member)

Here, as shown in FIGS. 15(a)-15(c), each of the first yoke 120A and the second yoke 120B is configured as a laminated yoke (laminate) in which a plurality of flat plate-like members 130 made of a magnetic material such as iron or the like in the plate thickness direction (the direction perpendicular to the radial direction of the coil 140). As a material of the plate-like members 130 (also referred to as laminated plate-like members), for example, a silicon steel plate (more specifically, a non-oriented silicon steel plate) having an oxide film formed on the surface thereof is employed. The plate-like members 130 are formed by punching a plate material by pressing or the like, and are configured as flat plates without being subjected to bending during formation of the yokes 120A, 120B.

As shown in FIG. 15(a), each plate-like member 130 is a substantially U-shaped iron piece, and has an outer peripheral side magnetic pole part 131 and an inner peripheral side magnetic pole part 133 forming two corresponding sides and a connection part 132 that is one side connecting the outer peripheral side magnetic pole part 131 and the inner peripheral side magnetic pole part 133.
The basic shapes of the plate-like members 130 are the same; as shown in FIGS. 15(b) and 15(c), a predetermined number of plate-like members 130 are laminated in the thickness direction, and thereby the outer peripheral side magnetic pole parts 121 of the yokes 120A, 120B are configured by the outer peripheral side magnetic pole parts 131 of the plate-like members 130. In addition, the inner peripheral side magnetic pole parts 133 of the yokes 120A, 120B are configured by the inner peripheral side magnetic pole parts 133 of the plate-like members 130. Furthermore, the connection parts 122 of the yokes 120A, 120B are configured by the connection parts 132 of the plate-like members 130. In this example, each of the yokes 120A, 120B is configured by laminating seven plate-like members 130.

As shown in FIG. 10, the first yokes 120A, 120B are assembled radially when viewed from the axial direction to the coil bobbin 110 so that the outer peripheral side magnetic pole part 121 comes to the outer diameter side. The first yoke 120A and the second yoke 120B are arranged to alternately line up at a fixed interval (in this example, the central angle=360°/32) in the circumferential direction.
Here, as shown in FIGS. 12-14, each of the yokes 120A, 120B is not simply arranged on a plane along the radial direction, but is disposed on a plane inclined to the radial direction (an actual arrangement surface of the yoke described later).

As described above, the first yoke 120A and the second yoke 120B alternately line up in the circumferential direction and are disposed radially when viewed from the center of the coil 140. Accordingly, when the first yoke 120A and the second yoke 120B are simply arranged on a plane along the radial direction, the positions of the inner peripheral side magnetic pole parts 123 of the adjacent first yoke 120A and second yoke 120B deviate from each other in the circumferential direction. Then, the inner peripheral side magnetic pole parts 123 of the adjacent first yoke 120A and second yoke 120B cannot be magnetically connected in a one-to-one relationship.

That is, when the first yoke 120A and the second yoke 120B are simply arranged on a plane along the radial direction, the front end 123a of the inner peripheral side magnetic pole part 123 of one first yoke 120A straddles and comes into contact with the front ends 123a of the inner peripheral side magnetic pole parts 123 of two adjacent second yokes 120B even when the inner peripheral side magnetic pole parts 123 of the first yoke 120A and the second yoke 120B are densely arranged in the circumferential direction.
Similarly, the front end 123a of the inner peripheral side magnetic pole part 123 of one second yoke 120B straddles and comes into contact with the front ends 123a of the inner peripheral side magnetic pole parts 123 of two adjacent first yokes 120A. In other words, the inner peripheral side magnetic pole part 123 of the first yoke 120A and the inner peripheral side magnetic pole part 123 of the second yoke 120B come into contact with each other in a one-to-two relationship.

When the inner peripheral side magnetic pole part 123 of the first yoke 120A and the inner peripheral side magnetic pole part 123 of the second yoke 120B come into contact with each other in a one-to-two relationship as descried above, the following problems may arise. That is, when the stator body 101A of the hub dynamo is actually assembled, the first yoke 120A is inserted into the coil bobbin 110 from one P-side in the axial direction and the second yoke 120B is inserted into the coil bobbin 110 from the other Q-side in the axial direction. At that time, for example, when the insertion direction dimension of the inner peripheral side magnetic pole part 123 of one second yoke 120B is shorter than the insertion direction dimension of the inner peripheral side magnetic pole part of the other second yoke 120B within the inner peripheral side magnetic pole parts 123 of the two second yokes 120B with which the front end 123a of the inner peripheral side magnetic pole part 123 of the first yoke 120A comes into contact (in other words, when there are variations in the insertion direction dimensions of the inner peripheral side magnetic pole parts 123 of the two adjacent second yokes 120B), the following circumstances may occur.

The front end 123a of the inner peripheral side magnetic pole part 123 of the first yoke 120A comes into contact with only the front end 123a of the inner peripheral side magnetic pole part 123 of the second yoke 120B having a longer insertion direction dimension and does not come into contact with the front end 123a of the inner peripheral side magnetic pole part 123 of the other second yoke 120B, and a gap may be generated between the front end 123a of the inner peripheral side magnetic pole part 123 of the first yoke 120A and the front end 123a of the inner peripheral side magnetic pole part 123 of the other second yoke 120B. When a gap is generated as described above in butted parts of the yokes 120A, 120B due to variations in the contacting surface caused by dimensional tolerances, the iron loss of the yokes 120A, 120B may increase and the performance may deteriorate.

Therefore, in the embodiment, the first yoke 120A and the second yoke 120B are disposed on a plane inclined to the radial direction. That is, as shown in FIG. 12(a), FIG. 12(b) and FIG. 13, first, during arrangement of the yokes 120A, 120B, a circumferential center QA of the outer peripheral surface in the outer peripheral side magnetic pole part 121 of the first yoke (hereinafter referred to as an arrangement position QA of the first yoke) and a circumferential center QB of the outer peripheral surface in the outer peripheral side magnetic pole part 121 of the second yoke 120B (hereinafter referred to as an arrangement position QB of the second yoke) are alternately set at intervals (θ=11.25°=360°/32) in the circumferential direction on the outer peripheral surface of the stator 101.

Next, as shown in FIG. 12(a) and FIG. 13, a plane including the central axis O of the hub shaft and the arrangement position QA of the first yoke is set as an arrangement reference surface SA0 of the first yoke. In addition, a plane including the arrangement position QA of the first yoke, parallel to the central axis O of the hub shaft, and inclined with respect to the arrangement reference surface SA0 of the first yoke by an angle αA to one side RA in the circumferential direction is set as an actual arrangement surface SA1 of the first yoke. Besides, the first yoke 120A is disposed on the actual arrangement surface SA1 of the first yoke.

In addition, as shown in FIG. 12(b) and FIG. 13, a plane including the central axis O of the hub shaft and the arrangement position QB of the second yoke is set as an arrangement reference surface SB0 of the second yoke. In addition, a plane including the arrangement position QB of the second yoke, parallel to the central axis O of the hub shaft, and inclined to the arrangement reference surface SB0 of the second yoke by an angle αB to the other side RB in the circumferential direction is set as an actual arrangement surface SB1 of the second yoke. Besides, the second yoke 120B is disposed on the actual arrangement surface SB1 of the second yoke.

In this case, since the interval between the arrangement position QA of the first yoke 120A and the arrangement position QB of the second yoke 120B adjacent to each other is 0 = 11.25°(= 360°/32), the inclination angles αA, αB of the actual arrangement surface SA1 of the first yoke and the actual arrangement surface SB1 of the second yoke with respect to the arrangement reference surfaces SA0, SB0 are set to αA = αB and smaller than 5.625°(= 11.25°/2), for example, 5°.

Then, on an intersection line SC (see FIG. 13) between the actual arrangement surface SA1 of the first yoke and the actual arrangement surface SB1 of the second yoke, as shown in FIGS. 14(b) and 14(c), the front end 123a of the inner peripheral side magnetic pole part 123 of the first yoke 120A and the front end 123a of the inner peripheral side magnetic pole part 123 of the second yoke 120B come into contact with each other due to a combination as shown by arrows FP, FQ in FIG. 14(a). Thereby, the inner peripheral side magnetic pole part 123 of the first yoke 120A and the inner peripheral side magnetic pole part 123 of the second yoke 120B are magnetically connected in a one-to-one relationship.

From the relationship in which the yokes 120A, 120B are disposed on the planes inclined with respect to the radial direction (the actual arrangement surfaces SA1, SB1 of the yokes) as described above, the following conclusion may be made.
That is, as shown in FIGS. 12 and 13, the guide grooves 113A, 113B of the first flange 112A and the second flange 112B of the coil bobbin 110 are also formed so that the extension directions of the guide grooves 113A, 113B are inclined at the same inclination angles αA, αB with respect to the radial direction.

In addition, the engagement grooves 114A, 114B are formed so as to follow the inclinations of the guide grooves 113A, 113B. The support grooves 115A, 115B which accommodate and support the front ends 121a of the outer peripheral side magnetic pole parts 121 of the opposite yokes 120A, 120B are formed with some margin, so as to prioritize the dimensional precision of the engagement grooves 114B, 114A having corresponding positions in the circumferential direction.

During assembly, as shown in FIG. 10, the first yoke 120A and the second yoke 120B are alternately inserted into the coil bobbin 110 from one P-side and the other Q-side in the axial direction. That is, the connection parts 122 of the yokes 120A, 120B are respectively fitted into the guide grooves 113A, 113B of the first flange 112A and the second flange 112B of the coil bobbin 110. In addition, the base ends of the outer peripheral side magnetic pole parts 121 of the yokes 120A, 120B are respectively fitted into the engagement grooves 114A, 114B of the first flange 112A and the second flange 112B of the coil bobbin 110.

Furthermore, the front ends 121a of the outer peripheral side magnetic pole parts 121 of the yokes 120A, 120B are respectively accommodated in the support grooves 115A, 115B of the first flange 112A and the opposite second flange 112B of the coil bobbin 110. In addition, the inner peripheral side magnetic pole parts 123 of the yokes 120A, 120B are respectively inserted along the inner peripheral surface of the coil bobbin 110, and the front ends 123a of the inner peripheral side magnetic pole parts 123 of the yokes 120A, 120B are abutted and come into contact with each other. Thereby, the yokes 120A, 120B are mounted to surround the coil 140.

Due to the assembly as described above, the outer peripheral side magnetic pole parts 121 of the first yokes 120A and the outer peripheral side magnetic pole parts 121 of the second yokes 120B are alternately disposed at intervals in the circumferential direction on the outer peripheral side of the ring-like coil 140 wound around the torso 111 of the coil bobbin 110. In addition, the inner peripheral side magnetic pole parts 123 of the first yokes 120A and the inner peripheral side magnetic pole parts 123 of the second yokes 120B are disposed on the inner peripheral side of the ring-like coil 140 wound around the torso of the coil bobbin 110.

At that time, the guide groove 113A of the first flange 112A of the coil bobbin 110 serves to position the first yoke 120A on the actual arrangement surface SA1 of the first yoke. In addition, the guide groove 113B of the second flange 112B serves to position the second yoke 120B on the actual arrangement surface SB1 of the second yoke. Besides, the plurality of yokes 120A, 120B is held so as not to rotate with respect to the coil bobbin 110.

Meanwhile, the support grooves 115A, 115B that are formed on the outer peripheries of the flanges 112A, 112B of the coil bobbin 110 and accommodate and support the front ends 121a of the outer peripheral side magnetic pole parts 121 of the opposite yokes 120A, 120B are formed with some margin with respect to the dimension of the front ends 121a of the outer peripheral side magnetic pole parts 121 of the yokes due to formation matters or the like. Therefore, it is found that there is a problem of abnormal noise generated at the front end 121a of the outer peripheral side magnetic pole part 121 of the yoke when the joining between the plate-like members 130 constituting the laminated yoke is weak. The principle of the generation of abnormal noise is described later.

### (Holder)

Therefore, the holders 160A, 160B are arranged to prevent the generation of abnormal noise. Next, the holders 160A, 160B are described in detail.

As shown in FIGS. 8 and 9, the first holder 160A is disposed on the axial outer side of the second flange 112B of the coil bobbin 110 located on the other Q-side in the axial direction so as to hold the front ends 121a extending to the other Q-side in the axial direction of the first yokes 120A. In addition, the second holder 160B is disposed on the axial outer side of the first flange 112A of the coil bobbin 110 located on the other Q-side in the axial direction so as to hold the front ends 121a extending to one P-side in the axial direction of the second yokes 120B.

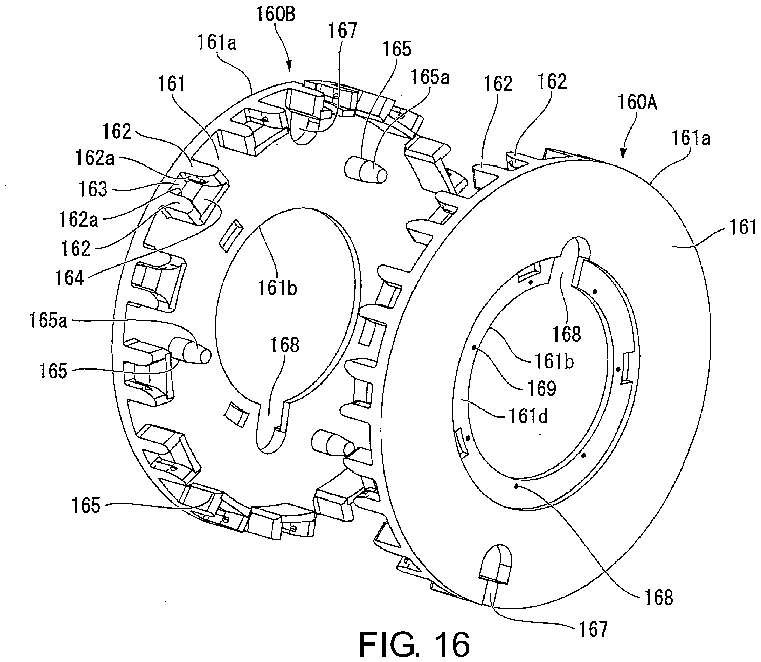

FIG. 16 is a perspective view of the first holder 160A and the second holder 160B. The holders 160A, 160B have the same configuration. The holders 160A, 160B have a holder body part 161 being annular and plate-like and a plurality of pressing walls 162 which is arranged in the circumferential direction on the outer peripheral side of the axial inner side surface of the annular plate-like holder body part 161 and protrudes radially inward. As shown in FIG. 9, the first holder 160A is disposed on the other Q-side in the axial direction with a side surface having the pressing walls 162 directed toward the second flange 112B of the coil bobbin 110. In addition, the second holder 160B is disposed on the one P-side in the axial direction with a side surface having the pressing walls 162 directed toward the first flange 112B of the coil bobbin 110.

In the plurality of pressing walls 162 arranged in the circumferential direction of the respective holders 160A, 160B, every other pair of pressing walls 162 (two pressing walls 162, 162) forms a holding groove 163 therebetween which clamps the front end 121a of the outer peripheral side magnetic pole part 121 of the yoke. In addition, when the front end 121a of the outer peripheral side magnetic pole part 121 of the yoke is inserted into the inner side surfaces of the pair of pressing walls 162, 162 forming the holding groove 163, a ridge 162a which is pressed in contact with the front end 121a of the outer peripheral side magnetic pole part 121 of the yoke is formed. In addition, the front end sides of the inner side surfaces of the pair of pressing walls 162 forming the holding groove 163 open in a C shape toward the axial direction (toward the flanges 112A, 112B of the coil bobbin) so as to facilitate the insertion of the front end 121a of the outer peripheral side magnetic pole part 121 of the yoke.

In addition, on the radial inner peripheral sides of the pair of pressing walls 162, a reinforcement wall 164 which connects the two pressing walls 162 by straddling the two pressing walls 162 is arranged. In addition, a positioning protrusion 165 being columnar and having a taper 165a at the front end is arranged on the axial inner side surface of the annular plate-like holder body part 161. In the embodiment, three positioning protrusions 165 are arranged at intervals in the circumferential direction, but the number is not limited. The positioning protrusions 165 are fitted into V-shaped positioning recesses 117A, 117B on the outer side surfaces of the flanges 112A, 112B of the coil bobbin 110, to thereby position the holders 160A, 160B in the circumferential direction (the rotation direction) with respect to the coil bobbin 110.

Coil drawing recesses 167, 168 (a coil drawing recess 167 at the outer peripheral edge and a coil drawing recess 168 at the inner peripheral edge) penetrating in the axial direction are respectively arranged at the outer peripheral edge 161a and the inner peripheral edge 161b of the annular plate-like holder body part 161. The start end or terminal end of the coil 140 is drawn out of the stator 101 through the coil drawing recesses 167, 168.

In addition, on the inner peripheral side of each annular plate-like holder body part 161, an inner peripheral side flange wall 161c that is fastened by the sleeve nut 42 or the fastening nut 44 screwed to the hub shaft 11 is arranged. The inner peripheral side flange wall 161c is set to be thinner than the holder body part 161. The axial inner side surface of the inner peripheral side flange wall 161c is flush with the axial inner side surface of the holder body part 161, but the axial outer side surface of the inner peripheral side flange wall 161c is at a position that is more recessed than the axial outer side surface of the holder body part 161. A plurality of crushing protrusions 169 is arranged at intervals in the circumferential direction on the side surfaces of the axial outer sides of the inner peripheral side flange walls 161c of the holders 160A, 160B.

When the first yoke 120A and the second yoke 120B are fastened in the axial direction by the sleeve nut 42 and the fastening nut 44 screwed to the hub shaft 11, the crushing protrusions 169 fulfil the function for absorbing the fastening force by being are crushed by the fastening force from the nuts 42, 44.

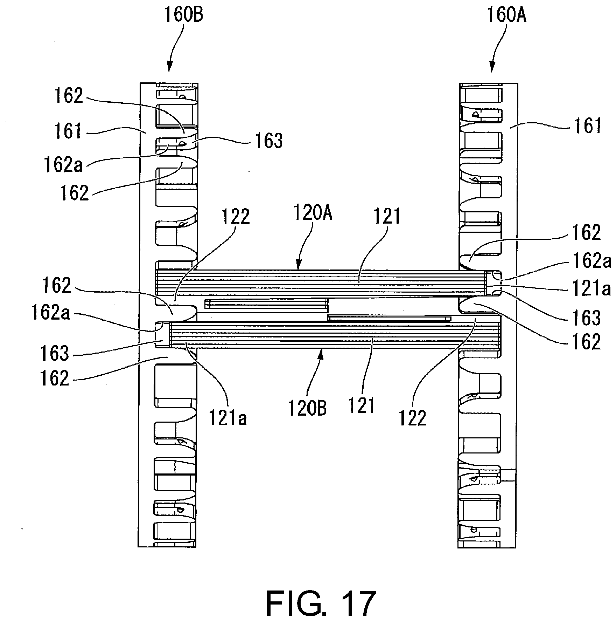

FIG. 17 is a side view showing the arrangement of the front ends 121a of the outer peripheral side magnetic pole parts 121 of the first yoke 120A and the second yoke 120B with respect to the first holder 160A and the second holder 160B.
As shown in FIGS. 8 and 17, the front ends 121a of the outer peripheral side magnetic pole parts 121 of the yokes 120A, 120B are inserted into the holding grooves 163 of the holders 160A, 160B configured as described above. That is, the front end 121a extending to the other Q-side in the axial direction of the outer peripheral side magnetic pole part 121 of the first yoke 120A passes through the support groove 115B of the second flange 112B of the coil bobbin 110 and is press-fitted into the holding groove 163 between the pair of pressing walls 162, 162 on the first holder 160A disposed on the axial outer side of the second flange 112B. Thereby, the plurality of plate-like members 130 (see FIG. 15) at the front end 121a of the outer peripheral side magnetic pole part 121 are clamped tightly in the lamination direction by the pair of pressing walls 162, 162.

Similarly, the front end 121a extending to one P-side in the axial direction of the outer peripheral side magnetic pole part 121 of the second yoke 120B passes through the support groove 115A of the first flange 112A of the coil bobbin 110 and is press-fitted into the holding groove 163 between the pair of pressing walls 162, 162 on the second holder 160B disposed on the axial outer side of the first flange 112A. Thereby, the plurality of plate-like members 130 (see FIG. 15) at the front end 121a of the outer peripheral side magnetic pole part 121 are clamped tightly in the lamination direction by the pair of pressing walls 162, 162.

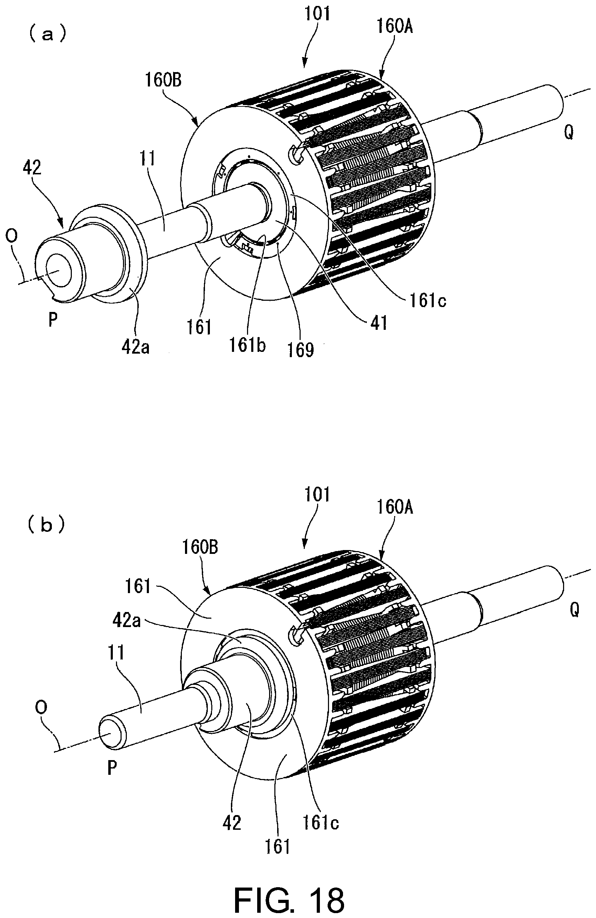

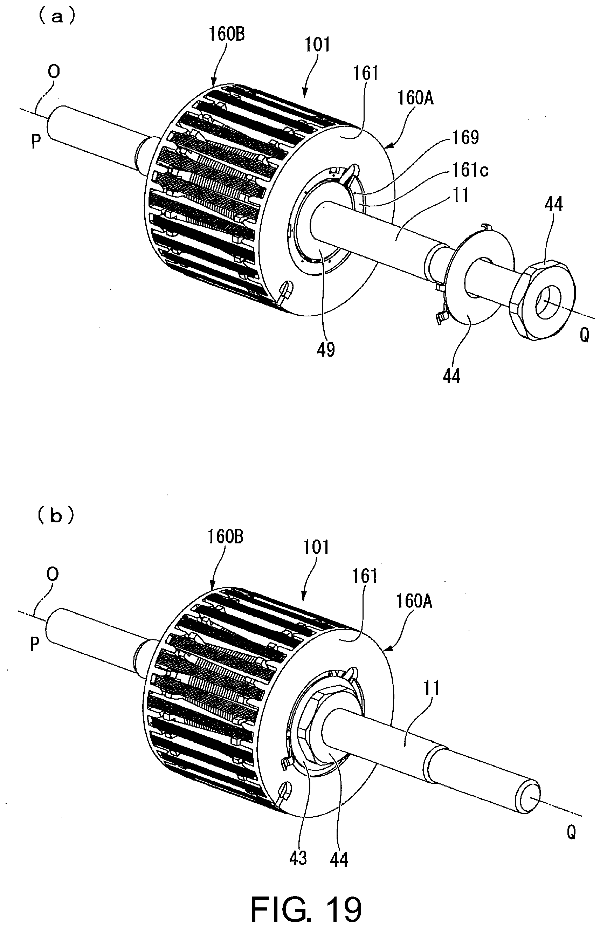

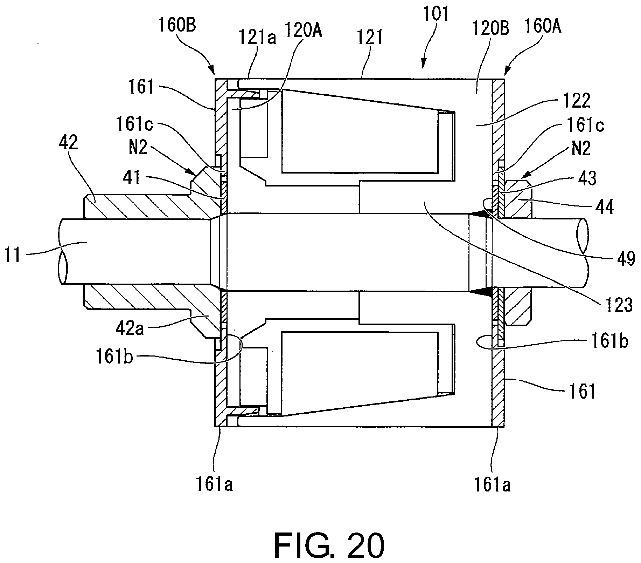

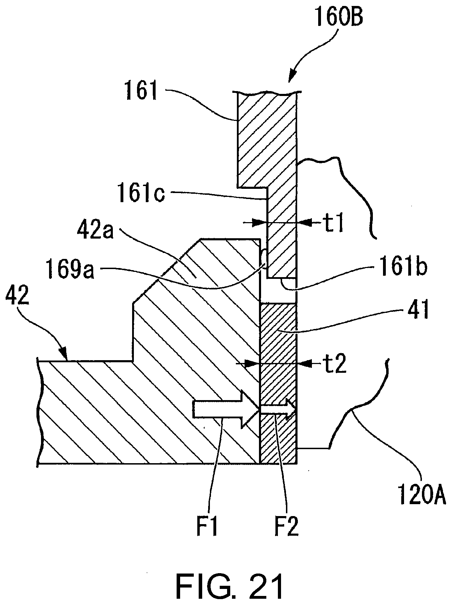

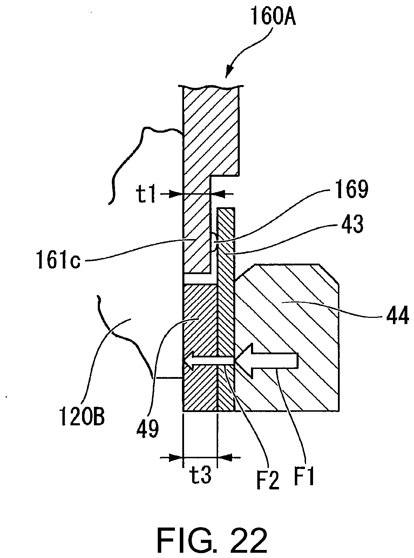

FIGS. 18(a) and 18(b) are perspective views viewed from one P-side in the axial direction for illustrating a relationship between the stator 101 and the nut 42 and a washer 41 for fastening; FIG. 18(a) is a diagram showing a state before fastening the nut 42, and FIG. 18(b) is a diagram showing a state after fastening the nut 42. FIGS. 19(a) and 19(b) are perspective views viewed from the other Q-side in the axial direction for illustrating a relationship between the stator 101 and the nut 44 and two washers 43, 49 for fastening; FIG. 19(a) is a diagram showing a state before fastening the nut 44, and FIG. 19(b) is a diagram showing a state after fastening the nut 44. FIG. 20 is a cross-sectional view for illustrating a relationship between the stator 101 and the nuts 42, 44 and the washers 41, 43, 49 for fastening. In addition, FIG. 21 is a partially enlarged view from an arrow direction N1 in FIG. 20. FIG. 22 is a partially enlarged view from an arrow direction N2 of FIG. 20.

As shown in FIGS. 18 and 19, the stator 101 (in which the holders 160A, 160B are disposed on both sides in the axial direction of the stator body 101A) is fixed to the hub shaft 11 by fastening the nuts 42, 44 screwed to the hub shaft 11.

First, a fastening structure of the stator 101 from one P-side in the axial direction is described based on FIGS. 18, 20, and 21.

As shown in FIGS. 18, 20, and 21, a fastening flange part 42a is arranged on the nut 42. The outer diameter of the fastening flange part 42a is set smaller than the diameter of the outer peripheral edge of the inner peripheral side flange wall 161c of the second holder 160B, and is set larger than the diameter of the circumference where the crushing protrusions 169 are disposed. Accordingly, when the nut 42 is fastened, the fastening flange part 42a of the nut 42 presses the inner peripheral side flange wall 161c while crushing the crushing protrusions 169 of the second holder 160B.

The outer diameter of the washer 41 made of metal is set smaller than the inner diameter of the holder body part 161 of the second holder 160B. In addition, a thickness t2 of the washer 41 is set larger than a thickness t1 of the inner peripheral side flange wall 161c of the second holder 160B. Accordingly, when the nut 42 is fastened, a strong fastening force F1 can be directly applied to the axial outer side surface of the first yoke 120A (the base end of the inner peripheral side magnetic pole part 123) as a force F2 via the washer 41.

Next, a fastening structure of the stator 101 from the other Q-side in the axial direction is described based on FIGS. 19, 20, and 22.

As shown in FIGS. 19, 20, and 22, the first washer 43 made of metal having a diameter larger than that of the nut 44 is disposed on the front side in the fastening direction of the nut 44. The outer diameter of the first washer 43 is set smaller than the diameter of the outer peripheral edge of the inner peripheral side flange wall 161c of the first holder 160A, and is set larger than the diameter of the circumference where the crushing protrusions 169 are disposed. Accordingly, when the nut 44 is fastened, the first washer 43 presses the inner peripheral side flange wall 161c while crushing the crushing protrusions 169 of the first holder 160A.

In addition, the second washer 49 made of metal is disposed on the front side in the fastening direction of the first washer 43. The outer diameter of the second washer 49 is set smaller than the inner diameter of the holder body part 161 of the first holder 160A. In addition, a thickness t3 of the second washer 49 is set larger than the thickness t1 of the inner peripheral side flange wall 161c of the first holder 160A. Accordingly, when the nut 44 is fastened, the strong fastening force F1 is directly applied to the axial outer side surface (the base end inner of the inner peripheral side magnetic pole part 123) as the force F2 via the first washer 43 and the second washer 49.

### (Details of yoke)

Next, details of the yokes 120A, 120B are described mainly with reference to FIG. 15.

When the yokes 120A, 120B are arranged radially viewed from the axial direction at intervals in the circumferential direction, the inner peripheral side magnetic pole parts 123 of the adjacent yokes 120A, 120B densely line up and thus may interfere with each other. Therefore, in the embodiment, on at least one of one end side or the other end side in the circumferential direction of the inner peripheral side magnetic pole part 123, a notch part 135 that avoids interference between the inner peripheral ends of the adjacent yokes 120A, 120B is arranged.

Here, the inclination direction of the actual arrangement surface SA1 of the first yoke with respect to the arrangement reference surface SA0 of the first yoke 120A is defined as an inclination direction of the first yoke, and the inclination direction of the actual arrangement surface SB1 of the second yoke with respect to the arrangement reference surface SB0 of the second yoke 120B is defined as an inclination direction of the second yoke. In addition, the seven laminated plate-like members 130 are denoted by reference numerals 130-1 to 130-7 that are respectively distinguished from the front side to the rear side in the inclination direction.

In this case, the dimensions of the laminated plate-like members 130 are determined in a manner that the position of the radial inner peripheral end of the laminated plate-like member (for example, the plate-like member 130-1) located on the front side in the inclination direction of the yoke 120A (120B) is radially outside of the position of the radial inner peripheral end of the laminated plate-like member (for example, the plate-like member 130-7) located on the rear side in the inclination direction of the yoke 120A (120B).

That is, as shown in FIG. 15(c), a radial dimension K1 of the plate-like member 130-1 located at the front end in the inclination direction of the first yoke 120A (120B) is set smaller by a dimension K3 than a radial dimension K2 of the plate-like member 130-2 located next to the plate-like member 130-1. In addition, the radial dimension K2 of the plate-like member 130-2 is set smaller by a dimension K5 than a radial dimension K4 of the plate-like members 130-3 to 130-7 located rearward of the plate-like member 130-2 in the inclination direction.

Thereby, when the plate-like members 130-1 to 130-7 are laminated, the notch part 135 that avoids interference with the inner peripheral end of the inner peripheral side magnetic pole part 123 of the adjacent yoke 120A (120B) is secured at the front end in the inclination direction of the inner peripheral end of the inner peripheral side magnetic pole part 123 of the yoke 120A (120B).

Moreover, depending on the degree of interference possibility, the radial dimensions of the plate-like members 130-2 to 130-7 may be set to be the same, and only the radial dimension K1 of the plate-like member 130-1 located at the foremost end in the inclination direction is set shorter than the radial dimensions of the other plate-like members 130-2 to 130-7. In addition, for example, the radial dimensions of the plate-like members subsequent of the plate-like member 130-3 which is the third one from the plate-like member 130-1 located at the foremost end in the inclination direction may also be set in a manner that the radial dimension becomes longer in order of the plate-like members 130-3 to 130-7 located rearward in the inclination direction.

As described above, the notch part 135 is arranged at the inner peripheral end on the front side in the inclination direction of the yoke 120A (120B), and thereby interference can be avoided even if the intervals between the plurality of yokes 120A (120B) lined up in the circumferential direction is dense. In other words, the arrangement interval of the yokes 120A (120B) can be reduced to arrange a large number of yokes 120A (120B).

Next, the action is described.

### (Electricity generation mechanism)

The electricity generation of the hub dynamo 10 configured as described above is performed in the following manner.

That is, when the front wheel 5 rotates, the rotor 20 connected to the front wheel 5 by the spoke 2 rotates around the hub shaft 11 together with the front wheel 5, and the permanent magnet 22 rotates around the stator 101.

Due to the magnetic flux of the rotating permanent magnet 22, a state in which the outer peripheral side magnetic pole part 121 of the first yoke 120A on one P-side in the axial direction is the N-pole and the outer peripheral side magnetic pole part 121 of the second yoke 120B on the other Q-side in the axial direction is the S-pole, and a state in which the outer peripheral side magnetic pole part 121 of the first yoke 120A on one P-side in the axial direction is the S-pole and the outer peripheral side magnetic pole part 121 of the second yoke 120B on the other Q-side in the axial direction is the N-pole are repeated alternately. Thereby, an alternating magnetic flux is generated in the inner peripheral side magnetic pole parts 123 of the yokes 120A, 120B magnetically connecting the yokes 120A, 120B. Due to the alternating magnetic flux generated on the inner peripheral side of the coil, a current flows through the coil 140 of the stator 101 to generate electricity.

During the electricity generation, in addition to the alternating magnetic flux, an eddy current is also generated. Although the eddy current reduces the electricity generation efficiency, in this hub dynamo 10, each of the yokes 120A, 120B is configured as a laminate of a plurality of plate-like members 130 and thus generation of the eddy current can be suppressed.

Next, the problem of abnormal noise generated in the outer peripheral side magnetic pole parts 121 (the teeth parts) of the first yoke 120A and the second yoke 120B is described.

When each of the yokes 120A, 120B is configured as a laminated yoke in which a plurality of plate-like members 130 (see FIG. 15) made of a magnetic material is laminated, the plate-like members 130 are usually joined by an adhesive. However, there is a possibility that abnormal noise is generated due to alternate rotation movement of the N-pole and the S-pole of the permanent magnet 22 on the outer peripheral side of the yokes 120A, 120B if the joining strength between the plate-like members 130 is insufficient.

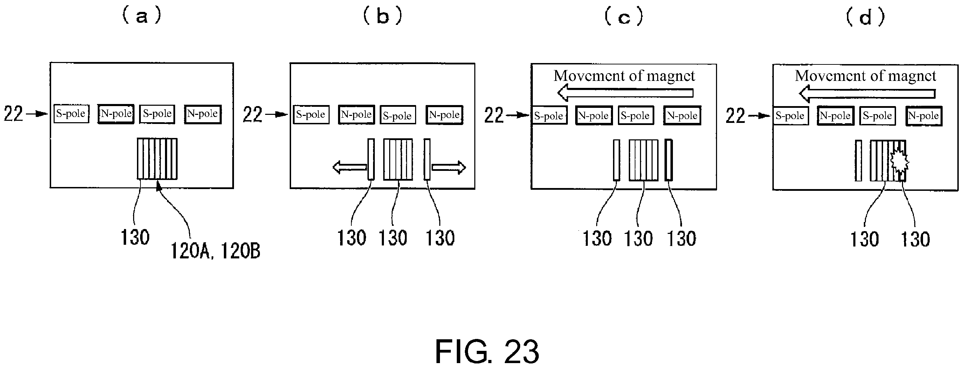

The principle of the generation of abnormal noise is described with reference to FIGS. 23(a)-23(d).

For example, as shown in FIG. 23(a), when the N-pole of the permanent magnet 22 passes through the outer periphery of the yoke, the outer ends (the outer peripheral side magnetic pole parts) of the yokes 120A, 120B are excited to the S-pole. Then, the laminated plate-like members 130 are all excited to the S-pole, and thereby a repulsive force is generated between the plate-like members 130 and the plate-like members 130 tend to be separated from each other.

As shown in FIG. 23(b), when the joining strength between the plate-like members 130 is weak, for example, one plate-like member 130 laminated on the outermost side may be separated although slightly. If the permanent magnet 22 moves more than a certain amount in this state, the adjacent S-pole approaches the one plate-like member 130 separated this time, and thereby the separated plate-like member 130 is excited to the N-pole as shown in FIG. 23(c).

When the separated plate-like member 130 is excited to the N-pole, an attractive force is generated with the remaining plate-like members 130 excited to the S-pole, and as shown in FIG. 23(d), the separated plate-like member 130 is attracted and slammed against the remaining plate-like members 130. At that time, there is a possibility that the abnormal noise caused by collision is generated.

At this point, in the embodiment, not only the base ends but also the front ends 121a of the outer peripheral side magnetic pole parts 121 of the yokes 120A, 120B are clamped tightly in the lamination direction of the plate-like members 130 by the holders 160A, 160A. Accordingly, the plate-like member 130 at the end in the lamination direction can be prevented from being separated from the other plate-like members 130 even if a magnetic repulsive force is generated between the plate-like members 130 of the laminated yoke. As a result, it is possible to eliminate a phenomenon that the plate-like member 130 at the end in the lamination direction is separated from the other plate-like members 130 according to the rotation of the permanent magnet 22 and then is magnetically attracted and slammed against the other plate-like members 130, and it is possible to resolve the generation of abnormal noise. In addition, since the front ends 121a of the outer peripheral side magnetic pole parts 121 of the yokes 120A, 120B are clamped in the state that the plate-like members 130 are in close contact with each other, it is also possible to omit a process for adhering the plate-like members 130 using an adhesive, and the manufacturing process is simplified.

In addition, the front end 121a extending to the other Q-side in the axial direction of the outer peripheral side magnetic pole part 121 of the first yoke 120A which holds one P-end side (base end side) in the axial direction by the first flange 112A of the coil bobbin 110 is supported by the first holder 160A disposed on the axial outer side of the second flange 112B of the coil bobbin 110. In addition, the front end 121a extending to one P-side in the axial direction of the outer peripheral side magnetic pole part 121 of the second yoke 120B which holds the other Q-end side (base end side) in the axial direction by the second flange 112B of the coil bobbin 110 is supported by the second holder 160B disposed on the axial outer side of the first flange 112A of the coil bobbin 110. In other words, the holders 160A, 160B that hold the front ends 121a of the outer peripheral side magnetic pole parts 121 are disposed separately from the flanges 112A, 112B of the coil bobbin 110 on a side opposite to the side where the yokes 120A, 120B are disposed. Therefore, regardless of the processing precision of the flanges 112A, 112B of the coil bobbin 110, the front ends 121a of the outer peripheral side magnetic pole parts 121 of the yokes 120A, 120B can be stably and tightly held as long as the precision of the holders 160A, 160B is secured.

In addition, since the pair of pressing walls 162, 162 that holds the front ends 121a of the outer peripheral side pole parts 121a of the yokes 120A, 120B is reinforced by the reinforcing wall 164 disposed on the inner peripheral side of the pressing walls 162, 162, the clamping force applied to the front ends 121a of the outer peripheral side magnetic pole parts 121 of the yokes 120A, 120B can be set strong. In addition, the reinforcing wall 164 is disposed across the inner peripheral side of the pair of pressing walls 162, 162, and thereby it is also possible to prevent the front ends 121a of the outer peripheral side magnetic pole parts 121 of the yokes 120A, 120B from deviating inward in the radial direction.

In addition, in the embodiment, the thicknesses t2, t3 of the washers 41, 49 that transmit the fastening force of the nuts 42, 44 to both ends of the stator 101 are set larger than the thickness t1 of the inner peripheral side flange walls 161c of the holders 160A, 160B. Thereby, the fastening force from the nuts 42, 44 can be directly applied to the base ends of the inner peripheral side magnetic pole parts 123 of the yokes 120A, 120B. Therefore, the front end 123a of the inner peripheral side magnetic pole part 123 of the first yoke 120A and the front end 123a of the inner peripheral side magnetic pole part 123 of the second yoke 120B can be brought into firm contact with each other, and the first yoke 120A and the second yoke 120B can be magnetically coupled in a satisfactory manner.

In addition, the crushing protrusions 169 are crushed during fastening of the nuts 42, 44 with respect to the resin holders 160A, 160B, and thereby an excessive fastening force can be prevented from acting on the holder body part 161. Therefore, the holders 160A, 160B can be fastened and fixed appropriately, and it is also unnecessary to set a small fastening force from the nuts 42, 44 just because there are the holders 160A, 160B made of resin. In other words, it is possible to increase the magnetic coupling between the first yoke 120A and the second yoke 120B by setting a large fastening force from the nuts 42, 44.

In addition, since the coil drawing recesses 167, 168 are arranged at the outer peripheral edge 161a and the inner peripheral edge 161b of the holders 160A, 160B, the start end or terminal end of the coil 140 can be drawn out smoothly.

In addition, in the hub dynamo of the embodiment, the first yoke 120A and the second yoke 120B are not disposed on the planes along the radial direction (the arrangement reference surfaces SA0, SB0 of the yokes) but on the planes inclined with respect to the radial direction (the actual arrangement surfaces SA1, SAB1 of the yokes). Therefore, the inner peripheral side magnetic pole part 123 of the first yoke 120A and the inner peripheral side magnetic pole part 123 of the second yoke 120B can be brought into contact with each other in a one-to-one relationship.

Accordingly, it is possible to eliminate the possibility that a gap is generated on the contacting surface between the first yoke 120A and the second yoke 120B due to variations caused by dimensional tolerances of the yokes 120A, 120B, and it is possible to increase the degree of close contact of the contacting surface. As a result, the magnetic connection between the yokes 120A, 120B can be stabilized to reduce the iron loss, and the efficiency can be improved.

In addition, in the embodiment, the yokes can be positioned on the planes inclined with respect to the radial direction (the actual arrangement surfaces SA1, SB1 of the yokes) by engaging the axial ends of the yokes 120A, 120B with the guide grooves 113A, 113B or the engagement grooves 114A, 114B of the flanges 112A, 112B of the coil bobbin 110. Accordingly, the positional relationship between the coil 140 wound around the coil bobbin 110 and the yokes 120A, 120B can be appropriately determined by assembling the yokes 120A, 120B to the coil bobbin 110.

Besides, the present invention is not limited to the above embodiment, and includes various modifications applied to the above embodiment without departing from the gist of the present invention.

For example, the lamination number of the plate-like members 130 when constituting the yokes 120A, 120B may be arbitrarily determined, and the number of the yokes 120A, 120B is not limited to 32 either.

In addition, the number of the stator 101 is not limited to one, and two or three stators 101 may be disposed in line on the hub shaft 11 to constitute the stator unit. In this case, an alternating current with deviating phases can be generated by deviating the phases of the two stators 101.

In addition, in the above embodiment, the holders 160A, 160B are configured separately from the flanges 112A, 112B of the coil bobbin 110, but the holders 160A, 160B may also be formed integrally with the flanges 112A, 112B of the coil bobbin 110.

### [Reference Signs List]

1 bicycle
2 spoke
3 front fork
4 headlight (light-emitting diode)
5 front wheel (wheel)
5a rim
10 hub dynamo
11 hub shaft
20 rotor
21 ring yoke
22 permanent magnet
22a inner peripheral surface of permanent magnet
30 hub shell
31 torso
32 first end blade
33 second end blade
34 flange
34a support hole
35 bearing
36 bearing
41 plate-like member
42 sleeve nut
43 plate-like member
44 fastening nut
45 separate sleeve nut
46 cover
47 nut
50 connector
51 nut
100 stator unit (hub shaft 11, stator 101 and the like)
101 stator
101A stator body
110 coil bobbin
111 torso
112A first flange
112B second flange
113A guide groove (first yoke connection part guide groove)
113B guide groove (second yoke connection part guide groove)
114A engagement groove (first yoke outer peripheral side guide groove)
114B engagement groove (second yoke outer peripheral side guide groove)
115A support groove
115B support groove
117A V-shaped recess
117B V-shaped recess
120 stator core
120A first yoke
120B second yoke
121 outer peripheral side magnetic pole part
121a front end
122 connection part
123 inner peripheral side magnetic pole part
123a front end
130,130-1-130-7 plate-like member
131 outer peripheral side magnetic pole part
132 connection part
133 inner peripheral side magnetic pole part
135 notch part
140 coil
150 stator central hole
160A first holder
160B second holder
161 holder body part
161a outer peripheral edge
161b inner peripheral edge
162 pressing wall
162a crushing convex part
163 holding groove
164 reinforcement wall
165 positioning protrusion
165a front end taper
167 coil drawing recess of outer peripheral edge
168 coil drawing recess of inner peripheral edge
169 crushing protrusion
O central axis of hub shaft
P one side in the axial direction
Q the other side in the axial direction
QA circumferential center (arrangement position of first yoke)
QB circumferential center (arrangement position of second yoke)
SA0 arrangement reference surface of first yoke
SA1 actual arrangement surface of first yoke
SB0 arrangement reference surface of second yoke
SB1 actual arrangement surface of second yoke
SC intersection line

## Claims

1. A hub dynamo, comprising:
a rotor having a hub shell rotating together with a wheel and a permanent magnet circumferentially disposed on an inner periphery of a torso of the hub shell, and
a stator non-rotatably fixed to a hub shaft supporting the wheel to be rotatable, disposed on an inner peripheral side of the permanent magnet while being accommodated in the hub shell, and having a ring-like coil that outputs an alternating current by rotation of the rotor;
wherein the stator comprises:
a plurality of first yokes and a plurality of second yokes disposed on one side in an axial direction and the other side in the axial direction to surround the ring-like coil, and radially disposed at intervals in a circumferential direction and alternately disposed in the circumferential direction, and
a first holder disposed on the other side in the axial direction to hold the other end side in the axial direction of the first yoke and a second holder disposed on one side in the axial direction to hold one end side in the axial direction of the second yoke;
wherein the first yoke comprises:
an outer peripheral side magnetic pole part located on an outer peripheral side of the coil and extending a front end from one end side in the axial direction to the other end side in the axial direction of the coil,
an inner peripheral side magnetic pole part located on an inner peripheral side of the coil and extending the front end from one end side in the axial direction of the coil to an intermediate position toward the other end side in the axial direction, and
a connection part extending linearly on one end side in the axial direction of the coil and connecting base ends of the outer peripheral side magnetic pole part and the inner peripheral side magnetic pole part;
wherein the second yoke comprises:
an outer peripheral side magnetic pole part located on the outer peripheral side of the coil and extending the front end from the other end side in the axial direction to one end side in the axial direction of the coil,
an inner peripheral side magnetic pole part located on the inner peripheral side of the coil and extending the front end from the other end side in the axial direction of the coil to an intermediate position toward one end side in the axial direction, and
a connection part extending linearly on the other end side in the axial direction of the coil and connecting the base ends of the outer peripheral side magnetic pole part and the inner peripheral side magnetic pole part;
the first yoke and the second yoke are respectively configured as a laminated yoke in which a plurality of flat plate-like members made of a magnetic material is laminated in a direction perpendicular to a radial direction of the coil, and the front end of the inner peripheral side magnetic pole part of the first yoke and the front end of the inner peripheral side magnetic pole part of the second yoke come into contact with each other on the inner peripheral side of the coil;
furthermore, the front end of the outer peripheral side magnetic pole of the first yoke is disposed between a pair of adjacent pressing walls among a plurality of pressing walls arranged in the circumferential direction on the first holder, and thereby the plurality of plate-like members at the front end of the outer peripheral side magnetic pole are clamped tightly in a lamination direction by the pair of pressing walls, and
the front end of the outer peripheral side magnetic pole of the second yoke is disposed between a pair of adjacent pressing walls among a plurality of pressing walls arranged in the circumferential direction on the second holder, and thereby the plurality of plate-like members at the front end of the outer peripheral side magnetic pole are clamped tightly in the lamination direction by the pair of pressing walls.

2. The hub dynamo according to claim 1,
wherein during arrangement of the first yoke and the second yoke, an arrangement position of the first yoke and an arrangement position of the second yoke are alternately set at intervals in the circumferential direction on an outer peripheral surface of the stator;
a plane comprising a central axis of the hub shaft and a circumferential center on an outer peripheral surface side of the outer peripheral side magnetic pole part of the first yoke is set as an arrangement reference surface of the first yoke, and a plane inclined to one side in the circumferential direction with respect to the arrangement reference surface of the first yoke is set as an actual arrangement surface of the first yoke, and thereby the first yoke is arranged on the actual arrangement surface of the first yoke;
a plane comprising the central axis of the hub shaft and the circumferential center on an outer peripheral surface side of the outer peripheral side magnetic pole part of the second yoke is set as an arrangement reference surface of the second yoke, and a plane inclined to the other side in the circumferential direction with respect to the arrangement reference surface of the second yoke is set as an actual arrangement surface of the second yoke, and thereby the second yoke is arranged on the actual arrangement surface of the second yoke; and
the front end of the inner peripheral side magnetic pole part of the first yoke and the front end of the inner peripheral side magnetic pole part of the second yoke come into contact with each other on an intersection line between the actual arrangement surface of the first yoke and the actual arrangement surface of the second yoke.

3. The hub dynamo according to claim 1 or 2,
wherein the stator has a coil bobbin holding the ring-like coil, and
the coil bobbin comprises:
a torso around which the coil is wound, a first flange disposed on one side in the axial direction of the torso and holding one end side in the axial direction of the first yoke, and
a second flange disposed on the other side in the axial direction of the torso and holding the other end side in the axial direction of the second yoke;
the first holder disposed on the other side in the axial direction comprises:
a plate-like holder body part being annular and disposed on an axial outer side of the second flange of the coil bobbin, and
a plurality of pressing walls arranged in the circumferential direction on an outer peripheral side of an axial inner side surface of the annular plate-like holder body part and protruding toward one side in the axial direction;
the second holder disposed on one side in the axial direction comprises:
a plate-like holder body part being annular and disposed on an axial outer side of the first flange of the coil bobbin, and
a plurality of pressing walls arranged in the circumferential direction on the outer peripheral side of the axial inner side surface of the annular plate-like holder body part and protruding toward the other side in the axial direction;
the front end of the outer peripheral side magnetic pole part of the first yoke is clamped between every other pair of pressing walls among the plurality of pressing walls arranged in the circumferential direction of the first holder, and
the front end of the outer peripheral side magnetic pole part of the second yoke is clamped between every other pair of pressing walls among the plurality of pressing walls arranged in the circumferential direction of the second holder.

4. The hub dynamo according to claim 3,
wherein on inner peripheral sides of the pressing walls forming a pair of the first holder and the second holder, a reinforcement wall that connects the two pressing walls by straddling the two pressing walls is arranged.

5. The hub dynamo according to claim 3 or 4,
wherein the first holder and the second holder are made of resin, and a plurality of protrusions is arranged, on a side surface of an inner peripheral side of the axial outer side of each annular plate-like holder body part of the first holder and the second holder, which absorbs a fastening force from a nut screwed to the hub shaft by being crushed by the nut when the first yoke and the second yoke are fastened in the axial direction by the nut.

6. The hub dynamo according to any one of claims 3 to 5,
wherein coil drawing recesses penetrating in the axial direction are arranged at the inner peripheral edge and the outer peripheral edge of the annular plate-like holder body part.
